(19) Europäisches Patentamt
European Patent Office
Office européen des brevets

(11) EP 3 907 304 B1

(12) EUROPEAN PATENT SPECIFICATION

(45) Date of publication and mention of the grant of the patent:
**21.02.2024 Bulletin 2024/08**

(21) Application number: **20778920.7**

(22) Date of filing: **13.03.2020**

(51) International Patent Classification (IPC):
*C21D 9/46 (2006.01)* *C22C 18/00 (2006.01)*
*C22C 38/04 (2006.01)* *C22C 38/60 (2006.01)*
*C23C 2/06 (2006.01)* *C23C 2/28 (2006.01)*
*C23C 2/32 (2006.01)* *C23C 2/40 (2006.01)*
*C23C 2/02 (2006.01)* *C23C 28/00 (2006.01)*
*B32B 15/01 (2006.01)* *C22C 38/02 (2006.01)*
*C22C 38/08 (2006.01)* *C22C 38/12 (2006.01)*
*C22C 38/16 (2006.01)* *C22C 38/18 (2006.01)*
*C22C 38/26 (2006.01)* *C22C 38/28 (2006.01)*
*C22C 38/32 (2006.01)* *C22C 38/38 (2006.01)*
*C22C 38/22 (2006.01)*

(52) Cooperative Patent Classification (CPC):
**C22C 38/02; B32B 15/013; C21D 1/04; C21D 1/26; C21D 1/76; C21D 8/0273; C21D 8/0278; C21D 9/0012; C21D 9/46; C22C 18/00; C22C 38/008; C22C 38/04; C22C 38/08; C22C 38/12; C22C 38/16;** (Cont.)

(86) International application number:
**PCT/JP2020/011076**

(87) International publication number:
**WO 2020/195946 (01.10.2020 Gazette 2020/40)**

(54) **HIGH-STRENGTH HOT-DIP GALVANIZED STEEL SHEET AND METHOD FOR PRODUCING SAME**

HOCHFESTES FEUERVERZINKTES STAHLBLECH UND VERFAHREN ZUR HERSTELLUNG DAVON

TÔLE D’ACIER GALVANISÉE PAR IMMERSION À CHAUD À HAUTE RÉSISTANCE ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2019 JP 2019055704**

(43) Date of publication of application:
**10.11.2021 Bulletin 2021/45**

(73) Proprietor: **JFE Steel Corporation**
**Tokyo 100-0011 (JP)**

(72) Inventors:
- **OKUMURA, Yusuke**
**Tokyo 100-0011 (JP)**
- **SUZUKI, Yoshitsugu**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**WO-A1-2014/136417**
**JP-A- H02 125 850**
**JP-A- H03 158 449**
**JP-A- S55 100 969**
**JP-A- 2000 064 020**
**JP-A- 2001 164 352**
**JP-A- 2005 213 643**
**KR-A- 20140 096 811**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **Imada, Kiyohisa; Sakaue, Katuji; Kawabata, Hirohito; Tutumi, Nobuo; Nakajima, Tadao; Nobuhara, Kazunori: "Studies on the Internal Surface of Porous Glass and Chemical Modification thereof", Nippon Kagaku Kaishi, vol. 4, 30 November 1989 (1989-11-30), pages 407-414, XP009529128, JP ISSN: 0369-4577, DOI: 10.1246/nikkashi.1990.407**

(52) Cooperative Patent Classification (CPC): (Cont.)
**C22C 38/18; C22C 38/22; C22C 38/26; C22C 38/28; C22C 38/32; C22C 38/38; C22C 38/60; C23C 2/02; C23C 2/022; C23C 2/0222; C23C 2/024; C23C 2/06; C23C 2/28; C23C 2/32; C23C 2/40; C23C 28/3225**

## Description

### Technical Field

The present invention relates to a high-strength hot-dip galvanized steel sheet that includes a high-strength steel sheet serving as a base material and containing Si and Mn and a method for producing the high-strength hot-dip galvanized steel sheet.

### Background Art

In recent years, surface-treated steel sheets obtained by imparting corrosion resistance to base material steel sheets, in particular, hot-dip galvanized steel sheets (including hot-dip galvannealed steel sheets) having good corrosion resistance, have been widely used in fields such as automobiles, household appliances, and construction materials. From the viewpoint of improving the fuel economy and the crashworthiness of automobiles, high-strength steel sheets have been increasingly used for automobiles in order to produce lighter, higher-strength automobile bodies by the use of higher-strength automobile body materials having smaller thicknesses.

A hot-dip galvanized steel sheet is typically produced by subjecting a hot-rolled steel sheet or cold-rolled steel sheet, serving as a base material, to recrystallization annealing, and then hot-dip galvanization in a continuous galvanizing line (CGL). After the hot-dip galvanization, alloying treatment is performed to produce a hot-dip galvannealed steel sheet.

High-strength steel sheets for automotive applications are required to have an excellent strength-ductility balance because they are press-formed. To deal with this demand, Si and Mn have the advantage of being able to increase the strength of steel without impairing the ductility of steel; thus, steels containing Si and Mn are very useful for high-strength steel sheets. In the case of producing high-strength hot-dip galvanized steel sheets using steels containing Si or steels containing Si and Mn as base materials, however, the following problems arise.

When a high-strength steel sheet is continuously annealed on a CGL, Si and Mn in the steel sheet are oxidized even in a reducing gas atmosphere where Fe is not oxidized (a gas atmosphere where an Fe oxide is reduced), Si and Mn oxides are formed on a surface (surface layer portion) of the steel sheet.

These Si and Mn oxides decrease wettability between molten zinc and the base steel sheet during coating treatment and cause surface defects, such as bare spots, to occur significantly more easily, compared with steel sheets containing almost no Si or Mn.

To solve these problems, hitherto, the following methods have been employed: a method in which the oxidation of Si and Mn on a surface of a steel sheet is suppressed by reducing the dew-point temperature of an atmosphere in an annealing furnace; and a method in which the oxidation of Si and Mn on a surface of a steel sheet is suppressed by increasing the dew-point temperature of an atmosphere in an annealing furnace to allow internal oxidation to occur. However, a large-sized device is needed in order to control the dew-point temperature. It is difficult to uniformly control the dew-point temperature in the annealing furnace. A nonuniform dew-point temperature leads to the occurrence of bare spots. In the case where the dew-point temperature is reduced, Si and Mn dissolved in a surface layer of a steel sheet are not oxidized; thus, a Si- and Mn-deficient layer is not formed. This hardens the microstructure of the surface layer of the steel sheet to result in poor bendability. In the case where the dew-point temperature is increased, an internal oxide layer is formed in the surface layer of the steel sheet. This internal oxide layer acts as a starting point of a crack, thereby resulting in poor bendability. Accordingly, the above-mentioned problems cannot be solved only by controlling the dew-point temperature of an atmosphere in an annealing furnace.

It is known that when a steel sheet composed of, for example, Al-killed steel or Si-killed steel is subjected to hot-dip coating, the application of ultrasound to the steel sheet in a coating bath can suppress the formation of pinholes and bare spots. For example, Patent Literature 1 discloses a method in which a target material is coated by arranging the front end of an ultrasonic horn at a position close to the target material via the surface of a molten metal bath while ultrasonic vibrations are applied from the ultrasonic horn to the target material. Patent Literature 2 discloses a method in which ultrasonic vibrations are applied to a Si-killed steel sheet or a high-strength steel sheet (0.12%C-0.35%Si-0.53%Mn) in a molten metal coating bath for 0.01 seconds or more. Patent Literature 3 discloses a method for forming a uniform Fe-Al alloy layer to prevent micro-defects by applying ultrasound to a fine-microstructure-containing steel sheet composed of, for example, an ultra-low-carbon Ti-containing IF steel or Al-killed steel in a molten zinc bath to promote the supply of Al from the molten zinc bath to the interface with the steel sheet.

### Citation List

#### Patent Literature

PTL 1: Japanese Unexamined Patent Application Publication No. 53-22126
PTL 2: Japanese Unexamined Patent Application Publication No. 57-23053
PTL 3: Japanese Unexamined Patent Application Publication No. 3-158449

KR 1020140096811A discloses a method for producing a hot-dip galvanized steel sheet having a good appearance and adhesion property, the method comprising subjecting a steel sheet to immersion in a hot-dip galvanizing bath containing molten zinc to perform hot-dip galvanization, characterized in that ultrasonic energy having a frequency of 15 kHz to 10 MHz is applied to the hot-dip galvanizing bath.

## Summary of Invention

### Technical Problem

However, Patent Literatures 1 to 3 only disclose the case where the strip speed is as low as 30 mpm or less. The methods disclosed in Patent Literatures 1 to 3 seem to be techniques that can be practically used only in such low speeds. That is, in the case of a higher strip speed, specifically, a strip speed of more than 60 mpm, bottom dross is suspended in the galvanizing bath, adheres to the ultrasonic horn, is transferred to a steel sheet, and causes dross adhesion defects, in some cases. It is thus necessary to maintain the low strip speed, resulting in low productivity. In the case where the technique disclosed in each of Patent Literatures 1 to 3 is used for a high-strength steel sheet having high Si and Mn contents, although a coated steel sheet having good appearance free from bare spots is produced without controlling the dew-point temperature in an annealing furnace, an oxide formed at the interface between the steel sheet and the coating may cause a decrease in the adhesion of coating. Moreover, Patent Literatures 1 to 3 do not disclose hot-dip galvannealing. In the case where a high-strength steel sheet having a high Si content is coated under the application of ultrasound, when alloying is performed at the same alloying treatment temperature as in the case where no ultrasound is applied, the alloying may be insufficient to cause uneven alloying.

To solve the foregoing problems in the related art, it is an object of the present invention to provide a method for stably producing a hot-dip galvanized steel sheet that includes a high-strength steel sheet serving as a base material and containing Si and Mn and that has good coating appearance and good adhesion of coating. It is another object of the present invention to provide a method for stably producing a hot-dip galvanized steel sheet excellent in coating appearance, the adhesion of coating, powdering resistance, workability, and bendability. It is another object of the present invention to provide a high-strength hot-dip galvanized steel sheet excellent in coating appearance and the adhesion of coating.

### Solution to Problem

The inventors have conducted intensive studies of a method that can solve the above-mentioned problems in the production of a hot-dip galvanized steel sheet including a high-strength steel sheet serving as a base material and have found that the application of ultrasound to a steel sheet in a coating bath or after the steel sheet has passed through the coating bath under specific conditions and the alloying treatment of the resulting coated layer result in good coating appearance free from bare spots or the like and incorporate oxides of Si and Mn formed on a surface layer portion of the steel sheet into the coated layer to improve the adhesion of coating. It has been also found that in the case where an atmosphere during reduction annealing has a dew-point temperature within a specific range, a Si- and Mn-deficient layer and an internal oxide layer can be controlled to appropriate ranges to improve the bendability.

The application of ultrasound to the steel sheet promotes the supply of Al from the hot-dip galvanizing bath to the steel sheet to promote the formation of an Fe-Al alloy layer. The Fe-Al alloy layer suppresses the diffusion of Fe into the coated layer during the alloying treatment after the hot-dip galvanization. It has been found that an alloying temperature necessary to obtain a predetermined degree of alloying (in the following description, the term "alloying temperature" refers to an "alloying temperature necessary to obtain a predetermined degree of alloying") may be increased to change the microstructure of the steel sheet, thereby possibly deteriorating the workability (powdering resistance) of the steel sheet. It has also been found that especially in the case of a Si-containing high-strength steel sheet, the application of ultrasound tends to further increase the alloying temperature to deteriorate the workability (powdering resistance) of the steel sheet because the alloying temperature is easily increased even if ultrasound is not applied. Upon further investigation, we have found that these problems can be solved by the optimization of the alloying treatment temperature based on the relationship between the ultrasonic frequency applied to the steel sheet and the effective Al concentration in the coating bath.

The present invention has been made on the basis of the foregoing findings. The method for producing a high-strength hot-dip galvanized steel sheet according to the present invention is defined in claim 1.

The high-strength hot-dip galvanized steel sheet according to the invention is defined in claim 11. Preferred embodiments are defined in dependant claims.

Advantageous Effects of Invention

According to the present invention, it is possible to stably produce a hot-dip galvanized steel sheet including, as a base material, a high-strength steel sheet containing Si and Mn, the hot-dip galvanized steel sheet having excellent adhesion of coating and beautiful coating appearance free from bare spots.

In the present invention, optimizations of annealing conditions and alloying treatment conditions enables the stable production of a hot-dip galvanized steel sheet excellent in coating appearance, the adhesion of coating, powdering resistance, workability, and bendability.

According to the present invention, it is possible to provide a high-strength hot-dip galvanized steel sheet excellent in coating appearance, the adhesion of coating, and bendability.

Brief Description of Drawings

[Fig. 1A] Fig. 1A schematically illustrates a typical embodiment of the present invention when ultrasound is applied to a steel sheet from an ultrasonic oscillation member, and is an explanatory view of an embodiment in the case of using an ultrasonic oscillation member including a horn.

[Fig. 1B] Fig. 1B schematically illustrates a typical embodiment of the present invention when ultrasound is applied to a steel sheet from an ultrasonic oscillation member, and is an explanatory view of an embodiment in the case of using an ultrasonic oscillation member including a roll.

[Fig. 2A] Fig. 2A schematically illustrates a mode of vibration of a roll when an ultrasonic oscillation member including the roll in the present invention is used, and is an explanatory view when the roll vibrates in the axial direction of the roll.

[Fig. 2B] Fig. 2B schematically illustrates a mode of vibration of a roll when an ultrasonic oscillation member including the roll in the present invention is used, and is an explanatory view when the roll vibrates in the radial direction of the roll.

[Fig. 3A] Fig. 3A is a schematic explanatory view illustrating one of various embodiments of the present invention with different positions of the application of ultrasound to a steel sheet.

[Fig. 3B] Fig. 3B is a schematic explanatory view illustrating one of various embodiments of the present invention with different positions of the application of ultrasound to a steel sheet.

[Fig. 3C] Fig. 3C is a schematic explanatory view illustrating one of various embodiments of the present invention with different positions of the application of ultrasound to a steel sheet.

[Fig. 4A] Fig. 4A schematically illustrates an embodiment of the present invention in which coating weight adjustment is performed with an ultrasonic oscillation member used for the application of ultrasound to a steel sheet and is an explanatory view illustrating an embodiment in the case of using an ultrasonic oscillation member including a horn.

[Fig. 4B] Fig. 4B schematically illustrates an embodiment of the present invention in which coating weight adjustment is performed with an ultrasonic oscillation member used for the application of ultrasound to a steel sheet and is an explanatory view illustrating an embodiment in the case of using an ultrasonic oscillation member including a roll.

[Fig. 5] Fig. 5 illustrates the results of a production test and a graph illustrating the relationship between the alloying treatment temperature and the effective Al concentration in a bath with respect to hot-dip galvannealed steel sheets having good powdering resistance and good coating appearance.

[Fig. 6] Fig. 6 illustrates the results of a production test and a graph illustrating the relationship between the alloying treatment temperature and the ultrasonic frequency applied to steel sheets with respect to hot-dip galvannealed steel sheets having good powdering resistance and good coating appearance.

Description of Embodiments

In the present invention, a high-strength steel sheet (base steel sheet) containing predetermined amounts of Si and Mn is subjected to recrystallization annealing and then immersion in a hot-dip galvanizing bath to perform hot-dip galvanizing. Subsequently, the steel sheet withdrawn from the hot-dip galvanizing bath is subjected to coating weight adjustment. Ultrasound is applied to the steel sheet from an ultrasonic oscillation member under predetermined conditions during a period from the start of the immersion to the end of the coating weight adjustment. Moreover, the steel sheet after the coating weight adjustment is subjected to alloying treatment under predetermined conditions.

In the production method of the present invention, as described above, ultrasound is applied to the steel sheet in the hot-dip galvanizing bath or immediately after the steel sheet has passed through the hot-dip galvanizing bath under predetermined conditions, and the hot-dip galvanized layer after the coating weight adjustment is subjected to alloying treatment, so that the prevention of the occurrence of defects, such as bare spots, and an improvement in adhesion of coating are achieved. The formation of oxides of Si and Mn deteriorates the coatability to cause the occurrence of bare spots and a deterioration in the adhesion of coating, in the related art. In contrast, in the method of the present invention, even when oxides of Si and Mn are formed, the coatability does not deteriorate, and beautiful coating appearance and good adhesion of coating can be obtained.

The production method of the present invention is performed in a continuous galvanizing line (CGL). The strip speed in the continuous line is 60 meters per minute (mpm) or more. The strip speed is 150 mpm or less. A strip speed of less than 60 mpm results in poor productivity and a longer time that the steel sheet is held at a high temperature in an annealing furnace. Thus, Si and Mn can be selectively oxidized to form surface oxides, possibly causing bare spots and a deterioration in the adhesion of coating even when ultrasound is applied. A strip speed of more than 150 mpm results in a larger amount of bottom dross suspended in the galvanizing bath to easily cause problems, such as the increase of dross adhesion defects, difficulty in controlling the coating weight, and difficulty in controlling the degree of alloying in the alloying treatment.

The recrystallization annealing, hot-dip galvanizing, application of ultrasound, alloying treatment, and so forth performed in the present invention will be described in order below. The chemical composition and so forth of the high-strength steel sheet (base steel sheet) will be described in detail below.

In the present invention, a steel sheet is subjected to recrystallization annealing before immersion of the steel sheet in the hot-dip galvanizing bath. The recrystallization annealing is usually performed in a reducing atmosphere. Alternatively, oxidation in a heating zone and then reduction treatment (reduction annealing) may be performed, as in an NOF-type CGL or a DFF-type CGL. The recrystallization annealing (reduction annealing) may be performed according to a conventional method and is not particularly limited. For example, the reduction treatment is typically performed with a radiant heating-type annealing furnace in a hydrogen-containing reducing atmosphere at a temperature of about 600°C or higher and about 900°C or lower, and is not limited thereto. In the case where oxidation in the heating zone and then reduction treatment (reduction annealing) are performed, a method by which an oxide film formed on a surface of the steel sheet in the heating zone can be reduced does not impair the advantageous effects of the present invention and should be effective in suppressing bare spots due to the surface oxides.

The atmosphere during the reduction annealing is preferably a hydrogen-nitrogen-based atmosphere. The hydrogen concentration is preferably 1% or more by volume. The hydrogen concentration is preferably 90% or less by volume. A hydrogen concentration of less than 1% by volume leads to insufficient reduction. A hydrogen concentration of more than 90% by volume results in an economic disadvantage.

The dew-point temperature of the atmosphere in the reduction annealing is preferably -40°C or higher and -20°C or lower. In the present invention, ultrasound is applied, under specific conditions, to the steel sheet in the galvanizing bath or to the steel sheet immediately after the steel sheet has passed through the galvanizing bath, and the coated layer is subjected to alloying treatment. This prevents the occurrence of defects, such as bare spots, and improves the adhesion of coating. In the case where the dew-point temperature of the atmosphere during the reduction annealing is within the above range, Si and Mn dissolved in the surface layer portion of the steel sheet are oxidized on the surface to form a Si- and Mn-deficient layer in the surface layer portion of the steel sheet. This results in a soft microstructure of the surface layer of the steel sheet, so that the steel sheet has improved bendability. Additionally, no internal oxide layer is formed; thus, no cracks starting from the internal oxide layer are formed, and the bendability is improved from this aspect as well.

In the case where the dew-point temperature of the atmosphere during the reduction annealing is lower than - 40°C, the oxidation of Si and Mn dissolved in the surface layer portion of the steel sheet is suppressed, and no Si- and Mn-deficient layer is formed. This results in a hard microstructure of the surface layer portion of the steel sheet. Thus, the bendability is less likely to be improved. To achieve a dew-point temperature of lower than -40°C, special equipment is required to reduce the dew-point temperature, increasing the equipment cost. A dew-point temperature of higher than -20°C results in the formation of an internal oxide layer in the surface layer portion of the steel sheet. Cracks starting from the internal oxide layer are easily formed. In this case as well, the bendability is less likely to be improved. To achieve a dew-point temperature of higher than -20°C, special equipment is required to increase the dew-point temperature, increasing the equipment cost. From the above points of view, the dew-point temperature of the atmosphere during the reduction annealing is preferably -40°C or higher and -20°C or lower. The dew-point temperature of the atmosphere during the reduction annealing is more preferably -35°C or higher. The dew-point temperature of the atmosphere during the reduction annealing is more preferably -25°C or lower. According to the present invention, a high-strength hot-dip galvanized steel sheet excellent in coating appearance, the adhesion of coating, and bendability is produced without a need for special equipment to achieve a dew-point temperature of lower than -40°C or higher than -20°C.

The steel sheet that has been subjected to recrystallization annealing as described above is cooled to a predetermined temperature and then immersion in a hot-dip galvanizing bath to perform hot-dip galvanization.

The hot-dip galvanizing bath contains an appropriate amount of Al in order to suppress the occurrence of dross and optimize the alloying temperature, for example. The effective Al concentration in the bath is 0.07% or more by mass.

The effective Al concentration in the bath is 0.170% or less by mass. The effective Al concentration in the bath used here is a value obtained by subtracting the concentration of Fe in the bath from the concentration of Al in the bath. An effective Al concentration in the bath of less than 0.07% by mass results in an increase in the amount of bottom dross formed and the adhesion of the dross to the steel sheet to easily cause defects. An effective Al concentration in the bath of more than 0.170% by mass results in an increase in the amount of top dross and the adhesion of the dross to the steel sheet to easily cause defects and also leads to an increase in cost due to the addition of Al. Preferably, the effective Al concentration in the bath and the ultrasonic frequency are appropriately adjusted in such a manner that the alloying treatment temperature T described below is optimized in the alloying treatment.

If necessary, one or more selected from Mg, Ni, Si, Ca, Cr, Mo, Ti, Co, V, Mn, Sr, Sb, B, and other elements may be added to the hot-dip galvanizing bath in addition to Al.

Other conditions for the hot-dip galvanization are not particularly limited. Usually, the hot-dip galvanization is preferably performed by immersing a steel sheet having a sheet temperature of 440°C or higher and 550°C or lower in the galvanizing bath having a bath temperature of 440°C or higher and 500°C or lower.

In the present invention, ultrasound is applied (ultrasonic vibration is imparted) to the steel sheet from an ultrasonic oscillation member (ultrasound-applying member) under predetermined conditions during a period from the start of the immersion of the steel sheet in the hot-dip galvanizing bath to the end of the coating weight adjustment of the steel sheet withdrawn from the hot-dip galvanizing bath. This improves wettability with molten zinc, so that molten zinc can uniformly wet and spread even on the surface oxides of Si and Mn to obtain beautiful coating appearance free from bare spots. The oxides of Si and Mn are incorporated into the coated layer through the subsequent alloying treatment, thereby obtaining excellent adhesion of coating.

The ultrasonic oscillation member that applies ultrasound to the steel sheet needs to be in contact with the molten zinc and is set at a distance of 0 mm or more and 30 mm or less from the steel sheet. The distance is preferably 0.2 mm or more, more preferably 0.5 mm or more. The distance is preferably 28 mm or less, more preferably 25 mm or less. A distance of 0 mm from the steel sheet indicates that it is in contact with the steel sheet.

If ultrasound is applied to the steel sheet in a state where the ultrasonic oscillation member is not in contact with the molten zinc, the application of the ultrasound does not work effectively to improve wettability with the molten zinc. In other words, the ultrasound is applied to a portion of the molten zinc located at a distance of 0 mm or more and 30 mm or less from the steel sheet, thereby improving the wettability with the molten zinc. In the case where the distance between the ultrasonic oscillation member and the steel sheet is more than 30 mm, the ultrasound does not act effectively on the steel sheet to fail to provide the effect of improving the wettability. Thus, in the case where the ultrasound is applied to the steel sheet in the hot-dip galvanizing bath, the distance between the ultrasonic oscillation member and the steel sheet is 0 mm or more and 30 mm or less. However, in the case where ultrasound is applied from the ultrasonic oscillation member to the steel sheet withdrawn from the hot-dip galvanizing bath, it is necessary to achieve a state in which the ultrasonic oscillation member is in contact with at least molten zinc adhering to a surface of the steel sheet.

The type of ultrasonic oscillation member used in the present invention is not particularly limited. Usually, an ultrasonic oscillation member including a horn (what is called an ultrasonic horn) or roll through which the vibration of an ultrasonic transducer (for example, Langevin-type transducer) is transmitted is used.

Figs. 1A and 1B each schematically illustrate a typical embodiment in the case of appying ultrasound to a steel sheet S from an ultrasonic oscillation member 1. Fig. 1A illustrates an embodiment in the case of appying ultrasound to the steel sheet S from the ultrasonic oscillation member 1 including a horn 2. Fig. 1B illustrates an embodiment when ultrasound is applied to the steel sheet S from the ultrasonic oscillation member 1 including a roll 3 (rotatable roll). Although Figs. 1A and 1B each illustrate a distance of 30 mm between the steel sheet S and the ultrasonic oscillation member 1, the ultrasonic oscillation member 1 applies (imparts) ultrasound to the steel sheet S within a distance of 30 mm. Typically, the steel sheet S has a thickness of about 1 mm, and the size of the ultrasonic oscillation member 1 (the thickness of the horn 2 and the diameter of the roll 3) is about several tens to about several hundreds of millimeters. However, since Fig. 1 is a schematic view, the size of the ultrasonic oscillation member 1 and the distance (30 mm) between the ultrasonic oscillation member 1 and the steel sheet S are reduced in relation to the thickness of the steel sheet S.

From the viewpoint of preventing dross inclusion between the ultrasonic oscillation member 1 and the steel sheet S, the ultrasonic oscillation member 1 including the roll 3 (rotatable roll) as illustrated in Fig. 1B is preferably used. The reasons for this are as follows: In the case where the ultrasonic oscillation member 1 includes the roll 3, dross inclusion is less likely to occur because the roll faces the steel sheet S in a line. Additionally, dross is less likely to be accumulated between the roll and the steel sheet S owing to the rotation of the roll 3. In the ultrasonic oscillation member 1, the vibration of the ultrasonic transducer is transmitted to the roll 3, and the ultrasonic vibration is imparted from the roll 3 to the steel sheet S.

To transmit the vibration of the ultrasonic transducer to the roll 3, usually, the vibration of the ultrasonic transducer is imparted to the roll shaft of the roll 3, and the roll 3 is vibrated by the ultrasonic transducer in the axial direction of the roll or in the radial direction of the roll.

Figs. 2A and 2B each schematically illustrate a mode of vibration of the roll 3.

The ultrasonic transducer of an ultrasonic oscillator 4 is mechanically connected or linked to a roll shaft 30 in such a manner that the ultrasonic vibration can be transmitted, so that the vibration of the ultrasonic transducer is transmitted to the roll 3 (roll main body) through the roll shaft 30. In accordance with the mounting configuration of the ultrasonic transducer of the ultrasonic oscillator 4 on the roll shaft 30, the roll 3 vibrates ultrasonically in the axial direction of the roll in Fig. 2A, and the roll 3 vibrates ultrasonically in the radial direction of the roll in Fig. 2B.

The roll 3 can be rotated by a driving device, such as a motor, and may be rotated (forward rotation with respect to the traveling direction of the steel sheet S) in such a manner that the roll surface facing the steel sheet S moves in the same direction as the traveling direction of the steel sheet. Alternatively, the roll may be rotated (backward rotation with respect to the traveling direction of the steel sheet S) in such a manner that the roll surface facing the steel sheet S moves in a direction opposite the traveling direction of the steel sheet. In the former case, the peripheral speed of the roll 3 may match the traveling speed of the steel sheet S. A mechanism in which the roll 3 is not driven and is rotated by being brought into contact with the steel sheet S may be used.

Here, in the case where the roll 3 is disposed in the hot-dip galvanizing bath, for example, the following configurations can be used. In the case where the roll 3 is a non-driven roll, the roll shaft 30 may be supported by the arm of a holding unit, and the roll 3 may be held in the bath, similar to a sink roll-supporting mechanism. In the case where the roll 3 is a driven roll, for example, the roll shaft 30 can be supported by bearings on both side walls of a pot, and the roll shaft 30 can be rotated by a drive disposed outside the pot.

The application of ultrasound to the steel sheet S from the ultrasonic oscillation member 1 including the foregoing roll 3 is less likely to cause dross inclusion to occur because of a small surface of the ultrasonic oscillation member 1 facing the steel sheet S, compared with the ultrasonic horn. Moreover, the dross is less likely to accumulate between the roll 3 and the steel sheet S due to the rotation of the roll 3; this can suppress defects caused by dross inclusion between the ultrasonic oscillation member 1 and the steel sheet S. In the case where the roll 3 rotates forward in the traveling direction of the steel sheet, even if the ultrasonic oscillation member 1 unintentionally comes into contact with the steel sheet S, it is possible to inhibit the steel sheet S from being scratched and also to reduce wear of the ultrasonic oscillation member 1. Accordingly, among the various embodiments described above, as an embodiment that can be particularly promising for the effects described above, preferably, the roll 3 vibrates ultrasonically in the radial direction of the roll and rotates in such a manner that the roll surface facing the steel sheet moves in the same direction as the traveling direction of the steel sheet (forward rotation with respect to the traveling direction of the steel sheet S), as illustrated in Fig. 2A. Particularly preferably, the roll peripheral speed of the roll 3 is the same as the traveling speed of steel sheet S.

The frequency of the ultrasound applied to the steel sheet is 10 kHz or more. At an ultrasonic frequency of less than 10 kHz, no effect of improving the wettability can be provided. At an ultrasonic frequency of more than 80 kHz, uneven alloying tends to occur, the effect of ultrasonic application is saturated, and an expensive ultrasonic oscillation member is required; thus, an ultrasonic frequency of 80 kHz or less is preferred. From the above perspectives, the ultrasonic frequency is preferably 15 kHz or more, more preferably 18 kHz or more. The ultrasonic frequency is more preferably 40 kHz or less, even more preferably 35 kHz or less. In the alloying treatment, preferably, the ultrasonic frequency and the effective Al concentration in the bath are adjusted to appropriate ranges in such a manner that the alloying treatment temperature T described below is optimized.

The time for applying the ultrasound is in the range of 0.010 seconds to 0.500 seconds. The time for applying the ultrasound is preferably 0.012 seconds or more, more preferably 0.015 seconds or more. The time for applying the ultrasound is preferably 0.350 seconds or less, more preferably 0.200 seconds or less. The time for applying the ultrasound is the time when the steel sheet lies in the range where the perpendicular distance from the surface of the steel sheet to the ultrasonic oscillation member is within 30 mm. In other words, the time for applying the ultrasound is the time for the steel sheet S to pass through a range L in each of Figs. 1A and 1B. The range L is a portion marked with dots in each figure and is the range (region) where the perpendicular distance from the surface of the steel sheet S to the ultrasonic oscillation member 1 is within 30 mm.

At an ultrasound application time of less than 0.010 seconds, the effect of improving the wettability is not sufficiently provided, and it is difficult to control the application time itself. At an ultrasound application time of more than 0.500 seconds, the formed Fe-Al alloy layer is liable to grow thickly to cause uneven alloying in the alloying treatment. A longer time for applying the ultrasound results in a longer distance required for the installation of the ultrasonic oscillation member, thus disadvantageously increasing the size of the device. From the above perspectives, the time for applying the ultrasound is preferably 0.012 seconds or more and 0.350 seconds or less, more preferably 0.015 seconds or more and 0.200 seconds or less.

The amplitude of the ultrasonic oscillation member is preferably, but not necessarily, about 1 $\mu$m or more.

The amplitude is 10 $\mu$m or less. At an amplitude of less than 1 $\mu$m, its control is difficult, and the effect of improving the wettability is apt to be small. At more than 10 $\mu$m, the excessively large amplitude causes damage to the steel sheet.

The position at which the ultrasound is applied to the steel sheet may be any position between a position at which the immersion of the steel sheet in the hot-dip galvanizing bath is started and a position at which the coating weight adjustment of the steel sheet withdrawn from the hot-dip galvanizing bath is completed. Figs. 3A to 3C schematically illustrate various embodiments with different positions of the application of ultrasound. In Figs. 3A to 3C, 5 denotes a hot-dip galvanizing bath, 6 denotes a sink roll, and 7 denotes gas wiping nozzles for the coating weight adjustment.

In the embodiment illustrated in Fig. 3A, the horn-type ultrasonic oscillation members 1 are used, ultrasound application to one surface of the steel sheet S is performed at a position just below a position where the steel sheet S enters the hot-dip galvanizing bath 5, and ultrasound application to the other surface of the steel sheet S is performed at a position where the steel sheet S is wrapped around the sink roll 6. In the embodiment illustrated in Fig. 3B, the roll-type ultrasonic oscillation members 1 are used, and ultrasound application to both surfaces of the steel sheet S is performed at a position (same position) where the steel sheet S is withdrawn from the hot-dip galvanizing bath 5. In the embodiment illustrated in Fig. 3C, the horn-type ultrasonic oscillation members 1 are used, and ultrasound application to both surfaces of the steel sheet S is performed at a position (same position) just below a position where the steel sheet S is withdrawn from the hot-dip galvanizing bath 5. In the case of applying ultrasound to the steel sheet S immersed in the hot-dip galvanizing bath 5, only the horn-type or roll-type ultrasonic oscillation members 1 are immersed in the bath, ultrasonic transducers are disposed outside the bath, and the vibrations are transmitted to the ultrasonic oscillation members 1. This is because the ultrasonic transducers, serving as ultrasonic oscillation sources, usually have no heat resistance to withstand the temperature of the bath.

Here, in the case where ultrasound is applied to the steel sheet S in the hot-dip galvanizing bath 5, especially in the case where ultrasound is applied at a deep position in the hot-dip galvanizing bath 5, the inclusion of bottom dross is likely to occur between the ultrasonic oscillation member 1 and the steel sheet S (bottom-dross inclusions are transferred to the steel sheet to cause dross adhesion defects). Additionally, limitations in terms of the maintenance and installation spaces for the ultrasonic oscillation member 1 are likely to occur. In the case where ultrasound is applied to the steel sheet S withdrawn from the hot-dip galvanizing bath 5 at a high position above the bath surface, the effect of ultrasound application is reduced because the solidification of the molten zinc has partially started. For the above reasons, the position where ultrasound is applied to the steel sheet S is preferably within the range of 1.5 m below the surface of the coating bath (lower level) to 5.0 m above the surface of the coating bath (upper level) (within the range indicated by the arrow in Fig. 3C) in the height direction with respect to the surface of the coating bath, more preferably within the range of 1.0 m below the surface of the coating bath to 3.0 m above the surface of the coating bath, even more preferably within the range of the surface of the coating bath to 2.0 m above the surface of the coating bath.

The ultrasonic oscillation members 1 may be disposed at one position or multiple positions. To apply ultrasound to the entire width direction of the steel sheet S, the multiple ultrasonic oscillation members 1 are preferably disposed in the width direction of the steel sheet and the longitudinal direction of the steel sheet. For example, two or more and 40 or less ultrasonic oscillation members 1 having a width of 50 mm or more and 300 mm or less are preferably disposed.

Ultrasound may be applied to only one surface of the steel sheet S. However, the effect does not extend to the surface of the steel sheet to which no ultrasound is applied; thus, as illustrated in Fig. 3A to 3C, it is preferable to apply ultrasound to both surfaces of the steel sheet, especially to apply ultrasound to both surfaces of the steel sheet at the same position.

The coating weight adjustment is performed by scraping off a portion of molten zinc adhering to surfaces of the steel sheet withdrawn from the hot-dip galvanizing bath. The coating weight (coating weight of the hot-dip galvanized steel sheet) after this adjustment is not particularly limited. An insufficient coating weight results in a decrease in corrosion resistance and makes it difficult to control the coating weight itself. An excessively high coating weight results in a deterioration in the adhesion of coating. Accordingly, usually, the coating weight per surface is preferably in the range of about 25 $g/m^2$ or more and about 80 $g/m^2$ or less.

A method for performing the coating weight adjustment is not particularly limited. Usually, gas wiping is performed as illustrated in Figs. 3A to 3C. The amount of molten zinc scraped off is adjusted by adjusting the gas pressure of the gas wiping and the distance between the gas wiping nozzles and the steel sheet. Thereby, the coating weight adjustment is performed.

In the present invention, the ultrasonic oscillation member 1, which applies ultrasound to the steel sheet S, may be used as a unit configured to perform the coating weight adjustment (unit configured to scrape molten zinc) to adjust the coating weight. Figs. 4A and 4B schematically illustrate embodiments in that case. Fig. 4A illustrates the case where the ultrasonic oscillation member 1 including the horn 2 is used. Fig. 4B illustrates the case where the ultrasonic oscillation member 1 including the roll 3 (rotatable roll) is used. In each case, the ultrasonic oscillation member 1 applies ultrasound to the steel sheet S and is disposed at a predetermined distance from the steel sheet S to scrape off a portion of molten zinc adhering to the surface of the steel sheet downward, thereby adjusting the coating weight. Typically, the steel sheet S has a thickness of about 1 mm, the coated layer has a thickness of about 10 $\mu$m, and the size of the ultrasonic oscillation member 1 (the thickness of the horn 2 and the diameter of the roll 3) is about several tens to about several hundreds of millimeters. However, since each of Figs. 4A and 4B is a schematic view, the thickness of the coated layer is enlarged, and the size of the ultrasonic oscillation member 1 is reduced, in relation to the thickness of the steel sheet S.

In the case where the ultrasonic oscillation member 1 including the roll 3 (rotatable roll) is used as illustrated in Fig. 4B, the roll 3 is rotated (backward rotation with respect to the traveling direction of the steel sheet S) in such a manner that the roll surface facing the steel sheet S moves in a direction opposite the traveling direction of the steel sheet. Thereby, a portion of molten zinc adhering to the surface of the steel sheet is scraped off downward.

Although Figs. 4A and 4B each illustrate only one surface of the steel sheet, the same coating weight adjustment is usually performed at the same position on the other surface of the steel sheet.

In the present invention, the hot-dip galvanized steel sheet that has been subjected to the coating weight adjustment as described above is heated to perform the alloying treatment of the coated layer. If this alloying treatment is not performed, the oxide films (oxides) of Si and Mn formed at the interface between the coated layer and the steel sheet cause a decrease in the adhesion of coating. The alloying treatment allows the steel sheet to react with zinc and incorporates the oxide films into the coated layer to improve the adhesion of coating. Even if the oxide films of Si and Mn are formed, the formation of the Fe-Al alloy layer and the alloying reaction proceeds through the gaps in the oxide films.

The treatment time of the alloying treatment is 10 seconds or more. The treatment time is preferably 11 seconds or more, more preferably 12 seconds or more. At a treatment time of less than 10 seconds, alloying does not proceed sufficiently; thus, the uneven alloying and the coating appearance are poor. The treatment time of the alloying treatment is preferably 60 seconds or less, more preferably 50 seconds or less, even more preferably 40 seconds or less. At a treatment time of more than 60 seconds, alloying proceeds excessively, thereby deteriorating the powdering resistance.

This alloying treatment is preferably performed at an alloying treatment temperature T (°C) that satisfies the following formula:

$$(25 \times \log(f + 2) - 300 \times \log(0.12 - [Al]) + 20) \leq T \leq (35 \times \log(f + 2) - 250 \times \log(0.12 - [Al]) + 150) \cdots (1)$$

$$T \leq 570 \cdots (2)$$

where [Al] is an effective Al concentration (% by mass) in the hot-dip galvanizing bath, and
f is the ultrasonic frequency (kHz) of the ultrasound applied to the steel sheet.

The reasons for limiting the alloying treatment temperature T specified in formulae (1) and (2) described above will be described below.

The application of ultrasound to the steel sheet promotes the supply of Al from the hot-dip galvanizing bath (or molten zinc adhering to the steel sheet) to the steel sheet to form an Fe-Al alloy layer at a gap between the oxide films of Si and Mn formed at the interface between the steel sheet and the coated layer, thereby increasing the alloying temperature.

To investigate the effects of the alloying treatment temperature in the alloying treatment, the frequency of ultrasound applied to the steel sheet during the hot-dip galvanization, and the effective Al concentration in the hot-dip galvanizing bath on the powdering resistance and coating appearance of the resulting hot-dip galvannealed steel sheet, the following production test was conducted. Steel sheets each containing, by mass percent, C: 0.12%, Si: 0.5% or more and 1.5% or less, and Mn: 2.7% were used as base steel sheets. The steel sheets were subjected to reduction annealing at an annealing temperature of 830°C in an annealing atmosphere having a dew-point temperature of -35°C and a $H_2$ concentration of 15% for a holding time of 120 seconds at the annealing temperature. Then the steel sheets were subjected to hot-dip galvanization by immersing the steel sheets in hot-dip galvanizing baths with different effective Al concentrations. In some production examples, ultrasound was applied to the steel sheets at different ultrasonic frequencies from ultrasonic oscillation members (ultrasonic horns) in the coating bath (ultrasound application time: 0.02 seconds). In the other production examples, no ultrasound was applied to the steel sheets. The steel sheets withdrawn from the coating bath were subjected to coating weight adjustment and then alloying treatment at an alloying treatment temperature of 450°C or higher and 670°C or lower for an alloying treatment time of 25 seconds. The powdering resistance and coating appearance of each hot-dip galvannealed steel sheet produced in this way were measured and evaluated in the same way as in Examples described below. Fig. 5 illustrates the results expressed in terms of the alloying treatment temperature and the effective Al concentration in the bath. Fig. 6 illustrates the results expressed in terms of the alloying treatment temperature and the ultrasonic frequency.

In Fig. 5, the black circle symbols indicate the case where no ultrasound is applied (0 kHz). The black circle symbols in Fig. 5 also indicate the alloying treatment temperatures at which rank 1 or 2 (excellent) was obtained when powdering resistance was evaluated in the same manner as in Examples described below (the same applies to the evaluation of "Powdering Resistance" described below) and at which rank 1 (excellent) was obtained when uneven alloying was evaluated in the same manner as in Examples described below (the same applies to the evaluation of "uneven alloying" described below).

The rhombus symbols in Fig. 5 indicate the case where ultrasound with a frequency of 40 kHz is applied. The rhombus symbols in Fig. 5 also indicate the alloying treatment temperatures at which both of the powdering resistance rated as rank 1 or 2 (excellent) and the coating appearance rated as rank 1 (excellent) free from uneven alloying were achieved.

In Fig. 6, the alloying treatment temperatures at which both of the powdering resistance rated as rank 1 or 2 (excellent) and the coating appearance rated as rank 1 (excellent) free from uneven alloying were achieved are indicated by the black circle symbols when the effective Al concentration in the bath was 0.105% by mass and by the rhombus symbols when the effective Al concentration in the bath was 0.088% by mass.

In Fig. 5, in the case where no ultrasound is applied (0 kHz), as the effective Al concentration in the bath increases, the formation of the Fe-Al alloy layer is promoted to increase the appropriate alloying treatment temperature. The upper limit of the appropriate alloying treatment temperature (upper limit expressed as a solid line) was ($T = 35 \times \log (2) - 250 \times \log (0.12 - [Al]) + 150$). The lower limit of the appropriate alloying treatment temperature (lower limit expressed as a solid line) was $T = 25 \times \log (2) - 300 \times \log (0.12 - [Al]) + 20$). In the case where ultrasound having a frequency of 40 kHz was applied, the formation of the Fe-Al alloy layer was further promoted. Thus, the appropriate alloying treatment temperature was increased even at the same Al concentration, compared with the case where no ultrasound was applied. The upper limit of the appropriate alloying treatment temperature (upper limit expressed as a broken line) was $T = 35 \times \log (42) - 250 \times \log (0.12 - [Al]) + 150$). The lower limit of the appropriate alloying treatment temperature (lower limit expressed as a broken line) was $T = 25 \times \log (42) - 300 \times \log (0.12 - [Al]) + 20$).

In Fig. 6, the formation of the Fe-Al alloy layer is promoted as the ultrasonic frequency increases. Thus, the appropriate alloying treatment temperature increases. In the case where the effective Al concentration in the bath is as high as 0.105% by mass, the upper limit of the appropriate alloying treatment temperature (upper limit expressed as a solid line) is $T = (35 \times \log(f + 2) - 250 \times \log(0.015) + 150)$, and the lower limit of the appropriate alloying treatment temperature (lower limit expressed as a solid line) is $T = (25 \times \log(f + 2) - 300 \times \log(0.015) + 20)$. In the case where the effective Al concentration in the bath is as low as 0.088% by mass, the upper limit of the appropriate alloying treatment temperature (upper limit expressed as a broken line) was $T = 35 \times \log (f + 2) - 250 \times \log (0.032) + 150)$, and the lower limit of the appropriate alloying treatment temperature (lower limit expressed as a broken line) was $T = (25 \times \log (f + 2) - 300 \times \log (0.032) + 20)$ .

From the results illustrated in Figs. 5 and 6, the following findings were obtained: In the case where the alloying treatment temperature is lower than $(25 \times \log(f + 2) - 300 \times \log(0.12 - [Al]) + 20)$°C, the progress of alloying is slowed down; thus, color irregularities on the surface are caused to easily deteriorate the coating appearance. It was also found that the oxides formed at the interface between the coated layer and the steel sheet deteriorated the adhesion of coating. In the case where the alloying treatment temperature is higher than $(35 \times \log (f + 2) - 250 \times \log (0.12 - [Al]) + 150)$°C, the powdering resistance is deteriorated. Furthermore, as illustrated in Fig. 6, the alloying treatment temperature needed increases as the ultrasonic frequency increases. As illustrated in Fig. 5, the alloying treatment temperature needed decreases as the effective Al concentration in the bath decreases. That is, in order to obtain particularly good powdering resistance and coating appearance, it is preferable to control the ultrasonic frequency and the effective Al concentration in the bath, as well as to precisely control the alloying treatment temperature after the hot-dip coating, i.e., it is preferable to satisfy formula (1) below:

$$(25 \times \log (f + 2) - 300 \times \log (0.12 - [Al]) + 20) \leq T \leq (35 \times \log (f + 2) - 250 \times \log (0.12 - [Al]) + 150) \cdots (1)$$

where [Al] is the effective Al concentration in the hot-dip galvanizing bath (% by mass), and
f is the ultrasonic frequency (kHz) of ultrasound applied to the steel sheet.

To reduce the alloying temperature, it is necessary to lower the effective Al concentration in the bath. Typically, a lower effective Al concentration in the bath, however, results in an increase in the amount of bottom dross in the coating bath. Especially in the case where an ultrasonic oscillation member is used and where the strip speed is increased, bottom dross may be suspended. This dross may adhere to the ultrasonic oscillation member and be transferred to a steel sheet, resulting in dross adhesion defects. This problem can be addressed by optimizing the configurations and positions of the ultrasonic oscillation members in the method of the present invention. It is possible to obtain a beautiful coating appearance and thus to reduce the effective Al concentration in the bath.

We have conducted studies on the workability of the steel sheets obtained in the above-mentioned production test in the same manner as in Examples described below and have found that in order to achieve desired workability (strength-ductility balance), the alloying treatment temperature is preferably 570°C or lower. When the alloying treatment temperature is higher than 570°C, a retained austenite phase, which is necessary to achieve high ductility, in a steel-sheet microstructure formed during recrystallization annealing (reduction annealing) may decompose into a pearlite phase, and the tempering of a martensite phase, which is necessary to achieve high strength, may occur, thereby possibly failing to achieve sufficient workability (strength-ductility balance). From the above point of view, the alloying treatment temperature is more preferably 550°C or lower. At lower than 450°C, the progress of alloying is slowed down; thus, 450°C or higher is preferred. More preferably, the alloying treatment temperature is 470°C or higher.

A heating method used in the alloying treatment is not particularly limited. A conventional heating method, such as gas heating, induction heating, or electrical heating, may be employed.

The Fe concentration (degree of alloying) of the hot-dip galvanized layer after the alloying treatment is not particularly limited. The Fe concentration (degree of alloying) is preferably about 6% or more by mass and about 15% or less by mass, more preferably 7% or more by mass and 13% or less by mass, even more preferably 8% or more by mass and 12% or less by mass. An Fe concentration of less than 6% by mass may result in uneven alloying in portions where an alloying reaction is insufficient and a deterioration in the adhesion of coating. An Fe concentration of more than 15% by mass may result in a deterioration in powdering resistance.

In the present invention, the coating appearance, the adhesion of coating, the powdering resistance, the workability, and the bendability can be evaluated by methods described in the examples.

The base steel sheet to be subjected to hot-dip galvanization in the present invention will be described below. In the following description, the units of element contents are "percent by mass" and are simply indicated by "%", for convenience.

The base steel sheet to be subjected to hot-dip galvanization in the present invention is a high-strength steel sheet containing, as solid-solution strengthening elements, Si: 0.1% or more and 2.5% or less and Mn: 1.0% or more and 3.0% or less. The tensile strength of the high-strength steel sheet is 440 MPa or more. This base steel sheet can be a cold-rolled steel sheet or hot-rolled steel sheet.

The base steel sheet has a chemical composition containing, as basic components, C: 0.3% or less, Si: 0.1% or more and 2.5% or less, Mn: 1.0% or more and 3.0% or less, P: 0.100% or less, and S: 0.010% or less. If necessary, the base steel sheet can contain one or more selected from Al: 0.01% or more and 1.0% or less, Mo: 0.05% or more and 1.0% or less, Nb: 0.005% or more and 0.05% or less, Ti: 0.005% or more and 0.05% or less, Cu: 0.05% or more and 1.0% or less, Ni: 0.05% or more and 1.0% or less, Cr: 0.01% or more and 0.8% or less, B: 0.0005% or more and 0.005% or less, Sb: 0.001% or more and 0.10% or less, and Sn: 0.001% or more and 0.10% or less, in order to control the balance between the strength and the ductility, etc. The reasons for these limitations will be described below.

• Si: 0.1% or More and 2.5% or Less

Si is an element effective in strengthening the steel to obtain good material properties. At a Si content of less than 0.1%, an expensive alloying element is needed to obtain high strength, which is economically undesirable. A Si content of more than 2.5% results in a higher alloying temperature. This makes it difficult to obtain desired mechanical properties even if the production conditions of the present invention are used. In addition, poor appearance, such as uneven alloying, and poor adhesion of coating are caused. Accordingly, the Si content is 0.1% or more and 2.5% or less.

· Mn: 1.0% or More and 3.0% or Less

Mn is an element effective in increasing the strength of steel and needs to be contained in an amount of 1.0% or more in order to achieve good mechanical properties and high strength. A Mn content of more than 3.0% may result in deteriorations in weldability and the adhesion of coating, thereby possibly making it difficult to achieve a good balance between the strength and the ductility. Accordingly, the Mn content is 1.0% or more and 3.0% or less.

• C: 0.3% or Less

A C content of more than 0.3% results in a deterioration in weldability. Thus, the C content is 0.3% or less. C facilitates an improvement in workability through the formation of, for example, a retained austenite phase and a martensite phase in the steel microstructure. Accordingly, the C content is preferably 0.025% or more.

· P: 0.100% or Less

P is an inevitably contained element; thus, the lower limit is not specified. A P content of more than 0.100% may result in a deterioration in weldability. Accordingly, the P content is 0.100% or less.

· S: 0.010% or Less

S is an inevitably contained element; thus, the lower limit is not specified. A S content of more than 0.010% may result in a deterioration in weldability. Accordingly, the S content is 0.010% or less.

· Al: 0.01% or More and 1.0% or Less

Al is an element effective in suppressing the formation of carbide to promote the formation of retained austenite. Al is also an element that is added as a deoxidizing agent in the steelmaking process. To provide these effects, the Al content needs to be 0.01% or more. An Al content of more than 1.0% results in more inclusions in the steel sheet to deteriorate the ductility. Accordingly, when Al is added, the Al content is 0.01% or more and 1.0% or less.

· Mo: 0.05% or More and 1.0% or Less

Mo is an element effective in adjusting the strength. At a Mo content of less than 0.05%, however, the effect of strength adjustment is less likely to be provided. A Mo content of more than 1.0% leads to an increase in cost. Accordingly, when Mo is added, the Mo content is 0.05% or more and 1.0% or less.

• Nb: 0.005% or More and 0.05% or Less

Nb is also an element effective in adjusting the strength. At a Nb content of less than 0.005%, however, the effect of strength adjustment is less likely to be provided. A Nb content of more than 0.05% leads to an increase in cost. Accordingly, when Nb is added, the Nb content is 0.005% or more and 0.05% or less.

• Ti: 0.005% or More and 0.05% or Less

Ti is also an element effective in adjusting the strength. At a Ti content of less than 0.005%, however, the effect of strength adjustment is less likely to be provided. At a Ti content of more than 0.05%, the adhesion of coating deteriorates easily. Accordingly, when Ti is added, a Ti content is 0.005% or more and 0.05% or less.

• Cu: 0.05% or More and 1.0% or Less

Cu is effective in promoting the formation of a retained austenite phase. At a Cu content of less than 0.05%, however, the effect of promoting the formation of the retained austenite phase is less likely to be provided. A Cu content of more than 1.0% leads to an increase in cost. Accordingly, when Cu is added, the Cu content is 0.05% or more and 1.0% or less.

· Ni: 0.05% or More and 1.0% or Less

Ni is also effective in promoting the formation of the retained austenite phase. A Ni content of less than 0.05%, however, the effect of promoting the formation of the retained austenite phase is less likely to be provided. A Ni content of more than 1.0% leads to an increase in cost. Accordingly, when Ni is added, the Ni content is 0.05% or more and 1.0% or less.

· Cr: 0.01% or More and 0.8% or Less

Cr is an element effective in improving the hardenability. At a Cr content of less than 0.01%, however, the effect of improving the hardenability is less likely to be provided, thereby possibly deteriorating the balance between the strength and the ductility. A Cr content of more than 0.8% leads to an increase in cost. Accordingly, when Cr is added, the Cr content is 0.01% or more and 0.8% or less.

· B: 0.0005% or More and 0.005% or Less

B is also an element effective in improving the hardenability. At a B content of less than 0.0005%, however, the effect of improving the hardenability is less likely to be provided. A B content of more than 0.005% results in the promotion of the oxidation of Si on a surface of the steel sheet to lead to poor coating appearance. Accordingly, when B is added, the B content is 0.0005% or more and 0.005% or less.

· Sb: 0.001% or More and 0.10% or Less

Sb is an element effective in suppressing, for example, denitrification and deboronization to suppress a decrease in the strength of steel. At an Sb content of less than 0.001%, however, the effect is less likely to be provided. An Sb content of more than 0.10% leads to deteriorations in toughness and cracking resistance in a shear area. Accordingly, when Sb is added, the Sb content is 0.001% or more and 0.10% or less.

· Sn: 0.001% or More and 0.10% or Less

Sn is also an element effective in suppressing, for example, denitrification and deboronization to suppress a decrease in the strength of steel. At a Sn content of less than 0.001%, however, the effect is less likely to be provided. A Sn content of more than 0.10% leads to deteriorations in toughness and cracking resistance in a shear area. Accordingly, when Sn is added, the Sn content is 0.001% or more and 0.10% or less.

The balance other than the basic components and optional additive components described above consists of Fe and incidental impurities.

A hot-dip galvannealed steel sheet produced in the present invention will be described below.

This hot-dip galvannealed steel sheet is produced by the production method of the present invention through reduction annealing in an atmosphere having a specific dew-point temperature (dew-point temperature: -40°C or higher and -20°C or lower) as described above, then hot-dip galvanization, and alloying treatment. The hot-dip galvannealed layer (hereinafter, referred to as an "alloyed coated layer", for the convenience of description) has an Fe concentration (degree of alloying) of 6% or more by mass and 15% or less by mass. An Fe concentration in the alloyed coated layer of less than 6% by mass may result in uneven alloying in portions where an alloying reaction is insufficient and a deterioration in the adhesion of coating. An Fe concentration of more than 15% by mass may result in a deterioration in powdering resistance. The Fe concentration in the alloyed coated layer can be determined, for example, by dissolving the alloyed coated layer of the coated steel sheet in hydrochloric acid containing an inhibitor and measuring the amounts of Fe and the remaining components, such as Zn, in the hydrochloric acid using ICP.

In a hot-dip galvannealed steel sheet produced in the present invention, the composition of the base steel sheet is as described above, and the amount of internal oxide containing Si oxide and Mn oxide in the base steel sheet (a surface layer portion of the steel sheet) is 0.05 g/m$^2$ or less (in terms of oxygen O), which is a sufficiently low level. When the internal oxides of Si and Mn are present in the surface layer portion of the steel sheet, these internal oxides act as starting points of cracks to easily deteriorate the bendability. However, when the amount of internal oxide is 0.05 g/m$^2$ or less (in terms of oxygen O), good bendability is obtained. Of the oxides of Si and Mn formed during reduction annealing, the oxides present in a portion extending from a surface of the steel sheet to a depth of about 0.5 μm are incorporated into the coated layer during the alloying treatment together with the oxides on the surface of the steel sheet. The oxides present further in the inner side of the steel sheet are left in the steel sheet as "internal oxides".

The amount of internal oxide can be measured by measuring the amount of oxygen in steel of the surface layer portion of the base steel sheet (base iron) after removal of the coated layer. The amount of oxygen in steel can be measured by an "impulse furnace fusion-infrared absorption method". To obtain the amount of internal oxide in the surface layer portion of the steel sheet just below the coated layer, it is necessary to subtract the amount of oxygen contained in the base material itself from the measured amount of oxygen in the steel. The surface layer portions on the front and back sides of a sample whose coated layers have been removed are mechanically polished to a depth of 100 μm or more, and the amount of oxygen in the steel of the resulting sample is separately measured in the same manner as above. By subtracting the resulting amount of oxygen in the steel from the amount of oxygen in the steel of the sample whose coated layers have been removed, the amount of oxygen in the steel of the surface layer portions of the steel sheet is calculated. This is converted into the amount of internal oxide per unit area and defined as the amount of internal oxide in the surface layer portions of the steel sheet (in terms of oxygen O, g/m$^2$). When the coated layer is removed, for example, the coated steel sheet only needs to be immersed in a solution mixture of 195 cc of an aqueous solution of 20% by mass NaOH-10% by mass triethanolamine and 7 cc of a 35% by mass hydrogen peroxide solution. This enables removal of only the coated layer.

The hot-dip galvannealed steel sheet produced in the present invention is subjected to reduction annealing in an atmosphere whose dew-point temperature is controlled within the predetermined range described above, so that the Si and Mn dissolved in each surface layer portion of the steel sheet are oxidized on the surface. The formation of Si- and Mn-deficient layer in the surface layer portion of the steel sheet softens the microstructure of the surface layer of the steel sheet to obtain good bendability. In this hot-dip galvannealed steel sheet, the Si and Mn oxides formed in the surface layer portion of the steel sheet during the reduction annealing are partially incorporated into the coated layer during the alloying treatment; thus, the coated layer (hot-dip galvannealed layer) contains the Si oxide and the Mn oxide.

In this hot-dip galvannealed steel sheet, the optimizations of the chemical composition of the base steel sheet and the reduction annealing conditions (dew-point temperature of the atmosphere) result in a reduction in the overall amount of oxides and the formation of the Si- and Mn-deficient layer in the surface layer portion of the steel sheet. Accordingly, the product ($M_{Si} \times M_{Mn}$) of the total amount of Si oxide $M_{Si}$ (in terms of metal Si, g/m$^2$) and the total amount of Mn oxide $M_{Mn}$ (in terms of metal Mn, g/m$^2$) present in the hot-dip galvannealed layer and at the interface between the hot-dip galvannealed layer and the steel sheet satisfies formula (3):

$$0.0004 \leq M_{Si} \times M_{Mn} \leq 0.0450. \quad \cdots(3)$$

When $M_{Si} \times M_{Mn}$ is less than 0.0004, the Si- and Mn-deficient layer is not appropriately formed in the surface layer portion of the steel sheet. Thus, the microstructure of the surface layer portion of the steel sheet is close to a single martensite phase and has high hardness, deteriorating the bendability. When $M_{Si} \times M_{Mn}$ is more than 0.0450, the absolute amount of Si and Mn oxides formed in the surface layer portion of the steel sheet is increased. Even if the Si and Mn oxides are partially incorporated into the coated layer, the remaining Si and Mn oxides deteriorate the adhesion of coating. From the above point of view, $M_{Si} \times M_{Mn}$ is more preferably in the range of 0.0010 or more. Additionally, $M_{Si} \times M_{Mn}$ is more preferably in the range of 0.0350 or less, even more preferably 0.0300 or less. The above-mentioned hot-dip galvannealed steel sheet is excellent in coating appearance, the adhesion of coating, and bendability. Moreover, the hot-dip galvannealed steel sheet is also excellent in powdering resistance and workability.

The amount of Si oxide ($M_{Si}$) and the amount of Mn oxide ($M_{Mn}$) present in the coated layer and at the interface between the coated layer and the steel sheet can be determined, for example, as follows: The coated steel sheet is immersed in a solution mixture of 195 cc of an aqueous solution of 20% by mass NaOH-10% by mass triethanolamine and 7 cc of a 35% by mass hydrogen peroxide solution to dissolve the coated layer. The solution is filtered, and then the amount of Si and the amount of Mn in the solution are measured by ICP emission spectroscopy and converted into the amount of Si per unit area $M^1_{Si}$ (in terms of metal Si, g/m$^2$) and the amount of Mn per unit area $M^1_{Mn}$ (in terms of metal Mn, g/m$^2$). Separately, the coated steel sheet is immersed in hydrofluoric acid containing an inhibitor to dissolve the coated layer (oxide present at the interface between the coated layer and the steel sheet is also dissolved). The solution is filtered, and then the amount of Si and the amount of Mn in the solution are measured by ICP emission spectroscopy and converted into the amount of Si per unit area ($M^2_{Si}$) (in terms of metal Si, g/m$^2$) and the amount of Mn per unit area ($M^2_{Mn}$) (in terms of metal Mn, g/m$^2$) . The amount of Si oxide ($M_{Si}$) and the amount of Mn oxide ($M_{Mn}$) are determined by the following formulae. That is, as $M^1_{Si}$ and $M^1_{Mn}$, the amount of Si and the amount of Mn, which are dissolved in the coated layer (and are non-oxides), are measured. As $M^2_{Si}$ and $M^2_{Mn}$, the total amount of Si and the total amount of Mn, which are present in the coated layer and at the interface between the coated layer and the steel sheet (and include oxides and non-oxides) are measured. $M_{Si}$ and $M_{Mn}$ are determined from the following formulae as the amount of oxides present in the coated layer and at the interface between the coated layer and the steel sheet:

$$M_{Si} = M^2_{Si} - M^1_{Si},$$

and

$$M_{Mn} = M^2_{Mn} - M^1_{Mn}.$$

EXAMPLES

Cast slabs of steels that were obtained by steelmaking and that had chemical compositions given in Table 1 were subjected to hot rolling, pickling, and then cold rolling to produce cold-rolled steel sheets having a thickness of 1.2 mm. These cold-rolled steel sheets were used as base steel sheets, and hot-dip galvannealed steel sheets were produced as follows: In a CGL equipped with an ART-type annealing furnace, the cold-rolled steel sheets were subjected to reduction annealing in a $N_2$-10% $H_2$ atmosphere (held at annealing temperatures given in Tables 2 and 3 for 120 seconds) and then immersion in a hot-dip galvanizing bath (coating bath temperature: 460°C) to perform hot-dip galvanization. Each of the steel sheets was withdrawn from the coating bath, and then the coating weight (the weight of coating) per side was adjusted to about 50 g/m$^2$ by gas wiping. Subsequently, alloying treatment was performed. Ultrasound was applied to both surfaces of the steel sheet (at the same position on both sides of the steel sheet) with ultrasonic oscillation members during a period from the time the steel sheet was immersed in the coating bath to the time the coating weight of the steel sheet withdrawn from the coating bath was adjusted by the gas wiping. As the ultrasonic oscillation members, horns or rolls as illustrated in Fig. 1 were used, and the amplitude was 5 μm.

Each of the rolls used for the ultrasonic oscillation members was the roll with the vibration mode illustrated in Fig. 2B and rotationally driven in such a manner that the roll surface facing the steel sheet moved in the same direction as the traveling direction of the steel sheet (forward-rotation drive with respect to the traveling direction of the steel sheet). The peripheral speed of the roll was the same as the strip speed.

In some examples (comparative examples), the ultrasound application and/or the alloying treatment was not performed.

For the produced hot-dip galvannealed steel sheets, the coating appearance was evaluated, and the adhesion of coating, the steel sheet workability (tensile properties), the bendability, and the powdering resistance were investigated. Their measurement and evaluation methods are described below.

· Coating Appearance

The appearance of each of the produced hot-dip galvannealed steel sheets was visually observed. Each steel sheet was inspected for the presence of bare spots, uneven alloying, and dross adhesion defects. Regarding the bare spots, the uneven alloying, and the dross adhesion defects, a steel sheet measuring 1,000 mm × 1,000 mm was taken from each of the equally divided 10 parts of one coil to prepare a total of 10 steel sheet samples. A steel sheet in which no defects were observed in any of the steel sheet samples was rated as excellent (A: rank 1). A steel sheet in which defects were observed in one or two steel sheet samples was rated as good (B: rank 2). A steel sheet in which defects were found in three or more steel sheet samples was rated as poor (C: rank 3). A steel sheet that was not rated as C in terms of all of the bare spots, the uneven alloying, and the dross adhesion defects was evaluated as having excellent coating appearance.

Here, the bare spots are defects that are visually recognized as black dots, and when surface or crosssectional observation and analysis are conducted by SEM-EDX, Zn adhesion is not observed, and the exposure of base iron can be observed. The uneven alloying is a defect in which unevenness can be visually observed because of the difference in the color of the coating, and when analysis is performed by SEM-EDX or ICP, the coated layer has a portion where the Fe concentration differs by 1% or more, compared with the surrounding area. The dross adhesion defects are defects in which point or line depressions or bumps can be visually observed on the coating, and when the cross section of the defective area is analyzed by SEM-EDX, the adhesion of dross clearly different from the zinc coating or base iron is observed. With respect to the composition of the dross, top dross is mainly composed of $Fe_2Al_5$, and bottom dross is mainly composed of $FeZn_7$. The dross may have a composition deviating from the equilibrium composition and may contain Al oxides, Fe oxides, and Zn oxides.

· Adhesion of Coating

A ball impact test was performed on test specimens taken from the coated steel sheets under ball impact conditions: ball weight: 1,000 g and 3,000 g; and ball drop height: 100 cm. The processed portions were peeled off with tapes, and the presence or absence of peeling of the coated layer was visually determined and evaluated as follows. In this evaluation, A or B was evaluated as excellent adhesion of coating.

A: The coated layer was not peeled at a ball weight of 3,000 g.
B: The coated layer was peeled at a ball weight of 3,000 g but was not peeled at a ball weight of 1,000 g.
C: The coated layer was peeled at a ball weight of 1,000 g.

· Powdering Resistance

Adhesive cellophane tapes were attached to test specimens taken from the coated steel sheets. Each of the tape-attached portions was subjected to 90°-bending and bending back. An adhesive cellophane tape with a width of 24 mm was pressed against the inside of the bent portion (compressed side) parallel to the bent portion and then was peeled off. The amount of zinc adhered to a 40-mm-long portion of the adhesive cellophane tape was measured as Zn counts by X-ray fluorescence. The Zn counts were converted into the amount (X-ray fluorescence counts) per unit length (1 m). According to the following criteria, a steel sheet rated rank 1 or 2 was evaluated as excellent (A), a steel sheet rated rank 3 was evaluated as good (B), and a steel sheet rated rank 4 or 5 was evaluated as poor (C). In this evaluation, A or B was evaluated as excellent powdering resistance.

Rank 1: X-ray fluorescence counts: less than 500
Rank 2: X-ray fluorescence counts: 500 or more and less than 1,000
Rank 3: X-ray fluorescence counts: 1,000 or more and less than 2,000
Rank 4: X-ray fluorescence counts: 2,000 or more and less than 3,000

Rank 5: X-ray fluorescence counts: 3,000 or more

· Workability of Steel Sheet (Tensile Properties)

A JIS No. 5 test specimen taken from each of the coated steel sheets was used. The tensile properties were measured in accordance with JIS Z2241 using the rolling direction as the tensile direction, and TS × EL was determined. A steel sheet with TS × EL > 12,000 was evaluated as having excellent steel sheet workability.

· Bendability

A strip-like test specimen with a width of 30 mm and a length of 100 mm was taken from each of the coated steel sheets in such a manner that a direction parallel to the rolling direction of the steel sheet was the axial direction of a bend test. The bend test was performed with the test specimen in accordance with JIS Z2248. In this bend test, a 90° V-bending test was performed under the conditions as follows: a pressing load of 100 kN, and a press-holding time of 5 seconds. In this 90° V-bending test, a ridge portion at the apex of the resulting bend was observed using a microscope ("RH-2000", available from Hirox Co., Ltd.) with a magnification of 40×. A bend radius when no cracks with a crack length of 200 μm or more were observed was defined as the minimum bend radius (R). The value (R/t) was obtained by dividing R by the sheet thickness (t). In accordance with the R/t, the bendability was evaluated as follows: In this evaluation, A or B was evaluated as excellent bendability.

A: R/t was 3.0 or less.
B: R/t was more than 3.0 and 4.5 or less.
C: R/t was more than 4.5.

Tables 2 to 5 present the results together with the production conditions.

According to Tables 2 to 5, the high-strength hot-dip galvanized steel sheets of the examples have beautiful coating appearance free from bare spots, dross adhesion defects, or uneven alloying, and also have excellent adhesion of coating. In the examples in which the annealing conditions and the alloying treatment conditions are optimized, the steel sheets are also excellent in steel sheet workability, powdering resistance, and bendability.

[Table 1]

| | | | | | | (% by mass) |
|---|---|---|---|---|---|---|
| Symbol | C | Si | Mn | P | S | Others |
| A | 0.07 | 0.25 | 1.8 | 0.03 | 0.001 | Mo:0.1, Nb:0.01, Cu:0.2 |
| B | 0.14 | 0.9 | 1.3 | 0.01 | 0.001 | Al:0.07, Cr:0.3 |
| C | 0.08 | 1.5 | 2.2 | 0.01 | 0.001 | Ni:0.3, Sb:0.01 |
| D | 0.12 | 1.4 | 1.9 | 0.01 | 0.001 | |
| E | 0.09 | 0.15 | 2.5 | 0.01 | 0.001 | Mo:0.1, Cr:0.6, Nb:0.04, B:0.001, Ti:0.02 |
| F | 0.11 | 1.5 | 2.7 | 0.01 | 0.001 | Ti:0.02, B:0.001 |
| G | 0.18 | 2.1 | 2.8 | 0.01 | 0.001 | Sn:0.01 |
| H | 0.08 | 2.7 | 1.5 | 0.01 | 0.001 | Ti:0.02, Mo:0.1 |
| I | 0.06 | 0.3 | 3.2 | 0.01 | 0.001 | |

[Table 2]

| No. | Base steel sheet *1 | Strip speed (mpm) | Annealing conditions | | | Effective Al concentration in coating bath (mass%) | Ultrasound application conditions | | | | | Class |
|---|---|---|---|---|---|---|---|---|---|---|---|---|
| | | | Annealing temperature (°C) | Hydrogen concentration (vol%) | Dew-point temperature (°C) | | Ultrasonic frequency (kHz) | Ultrasound application time (s) | Ultrasonic oscillation member | Position of ultrasonic oscillation member in height direction (m) *2 | Distance between steel sheet and ultrasonic oscillation member (mm) | |
| 1 | C | 80 | 750 | 5 | -35 | 0.080 | 20 | 0.030 | horn | -1.2 | 2.0 | Example |
| 2 | C | 120 | 780 | 10 | -34 | 0.092 | 20 | 0.020 | horn | -1.4 | 3.3 | Example |
| 3 | C | 80 | 810 | 15 | -35 | 0.090 | 20 | 0.030 | horn | -1.2 | 1.5 | Example |
| 4 | C | 150 | 770 | 2 | -38 | 0.083 | 40 | 0.160 | horn | -1.2 | 2.2 | Example |
| 5 | C | 150 | 810 | 5 | -36 | 0.085 | 10 | 0.160 | horn | -1.2 | 1.5 | Example |
| 6 | C | 65 | 850 | 5 | -34 | 0.072 | 40 | 0.037 | horn | -1.2 | 0.8 | Example |
| 7 | C | 120 | 830 | 5 | -29 | 0.084 | 75 | 0.020 | horn | -1.2 | 5.3 | Example |
| 8 | C | 150 | 830 | 85 | -32 | 0.086 | 75 | 0.016 | horn | -1.2 | 1.5 | Example |
| 9 | C | 150 | 760 | 15 | -34 | 0.088 | 75 | 0.016 | horn | +1.5 | 0.0 | Example |
| 10 | C | 65 | 780 | 10 | -39 | 0.096 | 15 | 0.037 | horn | +1.5 | 0.0 | Example |
| 11 | C | 65 | 850 | 5 | -34 | 0.074 | 40 | 0.037 | horn | +1.5 | 0.0 | Example |
| 12 | C | 80 | 810 | 10 | -26 | 0.081 | 45 | 0.030 | horn | -1.2 | 1.2 | Example |
| 13 | C | 70 | 840 | 5 | -22 | 0.079 | 45 | 0.034 | horn | -0.8 | 0.8 | Example |
| 14 | C | 80 | 810 | 5 | -30 | 0.086 | 45 | 0.030 | horn | -0.5 | 15.3 | Example |
| 15 | C | 70 | 840 | 15 | -26 | 0.080 | 20 | 0.034 | horn | -1.2 | 27.8 | Example |
| 16 | C | 65 | 790 | 10 | -28 | 0.073 | 15 | 0.480 | horn | -1.2 | 0.7 | Example |
| 17 | C | 65 | 800 | 10 | -30 | 0.086 | 15 | 0.480 | horn | -1.2 | 1.1 | Example |
| 18 | C | 70 | 840 | 15 | -26 | 0.166 | 45 | 0.034 | horn | +2.5 | 0.0 | Comparative example |
| 19 | C | 80 | 810 | 10 | -38 | 0.156 | 15 | 0.030 | horn | -1.2 | 2.5 | Comparative example |

(continued)

| No. | Base steel sheet *1 | Strip speed (mpm) | Annealing conditions | | | Effective Al concentration in coating bath (mass%) | Ultrasound application conditions | | | | | Class |
|---|---|---|---|---|---|---|---|---|---|---|---|---|
| | | | Annealing temperature (°C) | Hydrogen concentration (vol%) | Dew-point temperature (°C) | | Ultrasonic frequency (kHz) | Ultrasound application time (s) | Ultrasonic oscillation member | Position of ultrasonic oscillation member in height direction (m) *2 | Distance between steel sheet and ultrasonic oscillation member (mm) | |
| 20 | C | 70 | 790 | 10 | -30 | 0.154 | 20 | 0.034 | roll | -1.2 | 5.1 | Comparative example |
| 21 | G | 60 | 810 | 15 | -32 | 0.159 | 20 | 0.040 | roll | -1.2 | 3.3 | Comparative example |
| 22 | C | 80 | 800 | 70 | -28 | 0.162 | - | - | - | - | - | Comparative example |
| 23 | G | 70 | 830 | 10 | -30 | 0.164 | - | - | - | - | - | Comparative example |
| 24 | C | 60 | 770 | 15 | -28 | 0.088 | 15 | 0.040 | roll | -1.2 | 1.2 | Example |
| 25 | C | 150 | 810 | 5 | -32 | 0.073 | 15 | 0.016 | roll | -1.2 | 2.5 | Example |
| 26 | C | 80 | 790 | 15 | -32 | 0.090 | 15 | 0.030 | roll | -1.2 | 0.5 | Example |
| 27 | A | 150 | 800 | 10 | -33 | 0.088 | 40 | 0.016 | horn | -1.2 | 1.1 | Example |
| 28 | B | 80 | 840 | 15 | -31 | 0.090 | 40 | 0.030 | horn | -1.2 | 1.5 | Example |
| 29 | D | 65 | 830 | 15 | -29 | 0.081 | 20 | 0.037 | horn | -1.2 | 11.2 | Example |

*1 Base steel sheet A-I given in Table 1 *2 A position in the height direction with reference to the level of a coating bath surface, the minus sign indicating a position below the level of the coating bath surface, the plus sign indicating a position above the level of the coating bath surface.

[Table 3]

| No. | Base steel sheet *1 | Strip speed (mpm) | Annealing conditions | | | Effective Al concentration in coating bath (mass%) | Ultrasound application conditions | | | | | Class |
|---|---|---|---|---|---|---|---|---|---|---|---|---|
| | | | Annealing temperature (°C) | Hydrogen concentration (vol%) | Dew-point temperature (°C) | | Ultrasonic frequency (kHz) | Ultrasound application time (s) | Ultrasonic oscillation member | Position of ultrasonic oscillation member in height direction (m) *2 | Distance between steel sheet and ultrasonic oscillation member (mm) | |
| 30 | E | 65 | 840 | 10 | -31 | 0.079 | 20 | 0.037 | horn | -1.2 | 0.0 | Example |
| 31 | F | 70 | 830 | 10 | -32 | 0.087 | 45 | 0.034 | horn | -1.2 | 5.3 | Example |
| 32 | G | 90 | 840 | 15 | -34 | 0.093 | 75 | 0.027 | horn | -1.2 | 2.8 | Example |
| 33 | H | 70 | 830 | 15 | -34 | 0.096 | 40 | 0.034 | horn | -1.2 | 2.2 | Comparative example |
| 34 | I | 70 | 850 | 15 | -30 | 0.083 | 40 | 0.034 | horn | -1.2 | 0.7 | Comparative example |
| 35 | C | 70 | 770 | 10 | -31 | 0.095 | 75 | 0.034 | horn | -1.2 | 2.8 | Example |
| 36 | C | 80 | 810 | 10 | -34 | 0.075 | 120 | 0.030 | horn | -1.2 | 1.1 | Example |
| 37 | C | 120 | 810 | 10 | -38 | 0.092 | 5 | 0.020 | horn | -1.2 | 2.8 | Comparative example |
| 38 | C | 150 | 830 | 15 | -43 | 0.086 | 75 | 0.016 | horn | -1.2 | 1.5 | Example |
| 39 | C | 150 | 830 | 15 | -18 | 0.086 | 75 | 0.016 | horn | -1.2 | 1.5 | Example |
| 40 | C | 150 | 830 | 15 | -32 | 0.086 | 75 | 0.016 | horn | -2.5 | 1.5 | Example |
| 41 | C | 150 | 830 | 15 | -32 | 0.086 | 75 | 0.016 | horn | +8.0 | 0.0 | Example |
| 42 | C | 65 | 840 | 10 | -34 | 0.079 | 15 | 0.037 | horn | -1.2 | 2.2 | Example |
| 43 | C | 70 | 850 | 5 | -36 | 0.080 | 20 | 0.034 | horn | -1.2 | 1.3 | Example |
| 44 | C | 80 | 770 | 15 | -27 | 0.098 | 20 | 0.030 | horn | -1.2 | 0.8 | Example |
| 45 | C | 65 | 840 | 15 | -34 | 0.079 | 15 | 0.037 | horn | -1.2 | 2.2 | Example |
| 46 | C | 70 | 850 | 15 | -25 | 0.080 | 20 | 0.034 | horn | -1.2 | 1.3 | Example |
| 47 | C | 25 | 840 | 15 | -30 | 0.094 | 20 | 0.096 | horn | -1.2 | 1.3 | Example |

(continued)

| No. | Base steel sheet *1 | Strip speed (mpm) | Annealing conditions | | | Effective Al concentration in coating bath (mass%) | Ultrasound application conditions | | | | | Class |
|---|---|---|---|---|---|---|---|---|---|---|---|---|
| | | | Annealing temperature (°C) | Hydrogen concentration (vol%) | Dew-point temperature (°C) | | Ultrasonic frequency (kHz) | Ultrasound application time (s) | Ultrasonic oscillation member | Position of ultrasonic oscillation member in height direction (m) *2 | Distance between steel sheet and ultrasonic oscillation member (mm) | |
| 48 | C | 190 | 790 | 15 | -35 | 0.090 | 40 | 0.013 | horn | -1.2 | 1.3 | Comparative example |
| 49 | C | 80 | 800 | 10 | -32 | 0.081 | 45 | - | horn | -1.2 | 45.3 | Comparative example |
| 50 | C | 130 | 790 | 15 | -32 | 0.090 | 15 | 0.008 | horn | -1.2 | 1.5 | Comparative example |
| 51 | C | 110 | 780 | 15 | -30 | 0.081 | 40 | 0.550 | horn | -1.2 | 1.5 | Comparative example |
| 52 | C | 65 | 770 | 10 | -46 | 0.105 | - | - | - | - | - | Comparative example |
| 53 | G | 80 | 810 | 10 | -18 | 0.098 | - | - | - | - | - | Comparative example |
| 54 | C | 120 | 840 | 10 | -34 | 0.073 | - | - | - | - | - | Comparative example |
| 55 | C | 100 | 810 | 15 | -30 | 0.086 | 20 | 0.024 | horn | -1.2 | 28.2 | Example |
| 56 | C | 65 | 820 | 10 | -33 | 0.079 | 20 | 0.037 | horn | -1.2 | 2.5 | Example |
| 57 | C | 80 | 830 | 10 | -32 | 0.082 | 20 | 0.021 | horn | -1.4 | 1.5 | Example |
| 58 | C | 70 | 820 | 15 | -31 | 0.083 | 20 | 0.036 | horn | +4.8 | 2.3 | Example |

*1 Base steel sheet A-I given in Table 1
*2 A position in the height direction with reference to the level of a coating bath surface, the minus sign indicating a position below the level of the coating bath surface, the plus sign indicating a position above the level of the coating bath surface.

[Table 4]

| No. | Alloying treatment conditions | | | | $M_{Si} \times M_{Mn}$ | Amount of internal oxide (g/m²) | Fe concentration in coated layer (mass%) | Test results | | | | | | | Class |
|---|---|---|---|---|---|---|---|---|---|---|---|---|---|---|---|
| | Lower limit of formula (1) (°C) | Upper limit of formula (1) (°C) | Alloying treatment temperature (°C) | Alloying treatment time (s) | | | | Coating appearance | | | Adhesion of coating | Powdering resistance | Steel sheet workability | Bendability | |
| | | | | | | | | Bare spot | Dross adhesion | Uneven alloying | | | | | |
| 1 | 473 | 546 | 520 | 23 | 0.0142 | 0.042 | 12.1 | A | A | A | A | A | 14146 | A | Example |
| 2 | 519 | 585 | 530 | 15 | 0.0056 | 0.038 | 6.9 | A | A | A | A | A | 13914 | A | Example |
| 3 | 510 | 578 | 540 | 23 | 0.0076 | 0.012 | 9.2 | A | A | A | A | A | 13445 | A | Example |
| 4 | 490 | 565 | 540 | 12 | 0.0025 | 0.014 | 12.5 | A | A | A | A | A | 13164 | A | Example |
| 5 | 484 | 552 | 530 | 12 | 0.0009 | 0.032 | 12.4 | B | A | A | A | A | 12909 | A | Example |
| 6 | 456 | 537 | 490 | 28 | 0.0062 | 0.018 | 8.7 | A | B | A | A | A | 13162 | A | Example |
| 7 | 500 | 577 | 510 | 15 | 0.0030 | 0.022 | 8.1 | A | A | A | A | A | 14314 | A | Example |
| 8 | 508 | 583 | 530 | 12 | 0.0012 | 0.039 | 6.9 | A | A | A | A | A | 13753 | A | Example |
| 9 | 516 | 590 | 540 | 12 | 0.0039 | 0.025 | 7.5 | A | A | A | A | A | 14314 | A | Example |
| 10 | 537 | 598 | 560 | 28 | 0.0005 | 0.011 | 8.5 | A | A | A | A | A | 12025 | B | Example |
| 11 | 462 | 541 | 490 | 28 | 0.0062 | 0.018 | 7.7 | A | A | A | A | A | 13162 | A | Example |
| 12 | 484 | 561 | 510 | 23 | 0.0106 | 0.042 | 7.5 | A | A | A | A | A | 12891 | A | Example |
| 13 | 478 | 555 | 520 | 26 | 0.0422 | 0.048 | 10.7 | A | A | A | A | A | 12779 | B | Example |
| 14 | 502 | 576 | 510 | 23 | 0.0092 | 0.012 | 7.2 | A | A | A | A | A | 12850 | A | Example |
| 15 | 473 | 546 | 540 | 26 | 0.0214 | 0.035 | 13.3 | B | A | A | A | A | 12570 | A | Example |
| 16 | 449 | 525 | 510 | 28 | 0.0149 | 0.032 | 13.7 | A | B | B | A | A | 12770 | A | Example |
| 17 | 491 | 560 | 540 | 28 | 0.0128 | 0.012 | 12.8 | A | A | B | A | A | 14434 | A | Example |
| 18 | - | - | - | - | 0.0198 | 0.022 | 0.2 | A | B | - | C | A | 13946 | A | Comparative example |
| 19 | - | - | - | - | 0.0006 | 0.012 | 0.1 | A | A | - | C | A | 12934 | B | Comparative example |
| 20 | - | - | - | - | 0.0131 | 0.012 | 0.1 | A | A | - | C | A | 13478 | A | Comparative example |

(continued)

| No. | Alloying treatment conditions | | | | $M_{Si} \times M_{Mn}$ | Amount of internal oxide ($g/m^2$) | Fe concentration in coated layer (mass%) | Test results | | | | | | | Class |
|---|---|---|---|---|---|---|---|---|---|---|---|---|---|---|---|
| | Lower limit of formula (1) (°C) | Upper limit of formula (1) (°C) | Alloying treatment temperature (°C) | Alloying treatment time (s) | | | | Coating appearance: Bare spot | Coating appearance: Dross adhesion | Coating appearance: Uneven alloying | Adhesion of coating | Powdering resistance | Steel sheet workability | Bendability | |
| 21 | - | - | - | - | 0.0116 | 0.018 | 0.2 | A | A | - | C | A | 13720 | A | Comparative example |
| 22 | - | - | - | - | 0.0110 | 0.035 | 0.2 | C | C | - | C | A | 13659 | A | Comparative example |
| 23 | - | - | - | - | 0.0086 | 0.032 | 0.1 | C | C | - | C | A | 12864 | A | Comparative example |
| 24 | 499 | 567 | 530 | 30 | 0.0186 | 0.027 | 9.4 | A | A | A | A | A | 13556 | A | Example |
| 25 | 449 | 525 | 480 | 12 | 0.0014 | 0.021 | 8.6 | A | A | A | A | A | 12394 | A | Example |
| 26 | 508 | 574 | 520 | 23 | 0.0022 | 0.032 | 6.5 | A | A | A | A | A | 13758 | A | Example |
| 27 | 509 | 581 | 540 | 12 | 0.0094 | 0.015 | 9.0 | A | A | A | A | A | 13387 | A | Example |
| 28 | 517 | 588 | 530 | 23 | 0.0012 | 0.030 | 6.8 | A | A | A | A | A | 13573 | A | Example |
| 29 | 476 | 549 | 500 | 28 | 0.0097 | 0.012 | 7.5 | A | A | A | A | A | 13344 | A | Example |

[Table 5]

| No. | Alloying treatment conditions | | | | $M_{Si} \times M_{Mn}$ | Amount of internal oxide ($g/m^2$) | Fe concentration in coated layer (mass%) | Test results | | | | | | | Class |
|---|---|---|---|---|---|---|---|---|---|---|---|---|---|---|---|
| | Lower limit of formula (1) (°C) | Upper limit of formula (1) (°C) | Alloying treatment temperature (°C) | Alloying treatment time (s) | | | | Coating appearance | | | Adhesion of coating | Powdering resistance | Steel sheet workability | Bendability | |
| | | | | | | | | Bare spot | Dross adhesion | Uneven alloying | | | | | |
| 30 | 470 | 544 | 520 | 28 | 0.0080 | 0.023 | 12.6 | A | A | A | A | A | 13676 | A | Example |
| 31 | 506 | 579 | 530 | 26 | 0.0223 | 0.037 | 7.5 | A | A | A | A | A | 13234 | A | Example |
| 32 | 538 | 608 | 540 | 20 | 0.0311 | 0.010 | 8.9 | A | A | A | A | A | 13218 | A | Example |
| 33 | 547 | 612 | 630 | 26 | 0.0494 | 0.035 | 14.4 | A | A | C | C | C | 11532 | A | Comparative example |
| 34 | 490 | 565 | 500 | 26 | 0.0518 | 0.012 | 4.5 | A | A | A | C | A | 11638 | A | Comparative example |
| 35 | 548 | 617 | 590 | 26 | 0.0153 | 0.022 | 11.6 | A | A | A | A | A | 10984 | A | Example |
| 36 | 476 | 560 | 510 | 23 | 0.0079 | 0.021 | 8.4 | A | B | B | A | A | 12697 | A | Example |
| 37 | 507 | 568 | 520 | 15 | 0.0008 | 0.011 | 6.5 | C | A | A | A | A | 12589 | B | Comparative example |
| 38 | 508 | 583 | 530 | 12 | 0.0002 | 0.007 | 6.9 | A | A | A | A | A | 12543 | C | Example |
| 39 | 508 | 583 | 530 | 12 | 0.0523 | 0.120 | 7.2 | A | A | A | B | A | 13426 | B | Example |
| 40 | 508 | 583 | 530 | 12 | 0.0018 | 0.018 | 7.4 | A | B | A | A | A | 12343 | A | Example |
| 41 | 508 | 583 | 530 | 12 | 0.0022 | 0.032 | 6.8 | B | A | A | A | A | 12343 | A | Example |
| 42 | 467 | 540 | 560 | 28 | 0.0071 | 0.015 | 14.4 | A | A | A | A | B | 12032 | A | Example |
| 43 | 473 | 546 | 580 | 26 | 0.0009 | 0.024 | 14.3 | A | A | A | A | B | 11219 | B | Example |
| 44 | 551 | 611 | 530 | 23 | 0.0151 | 0.038 | 6.2 | A | A | B | B | A | 12343 | A | Example |
| 45 | 467 | 540 | 560 | 28 | 0.0071 | 0.025 | 14.7 | A | A | A | A | B | 12041 | A | Example |
| 46 | 473 | 546 | 580 | 26 | 0.0283 | 0.043 | 14.1 | A | A | A | A | B | 11219 | A | Example |
| 47 | 529 | 593 | 540 | 73 | 0.0149 | 0.014 | 6.5 | A | A | A | A | C | 14314 | A | Example |
| 48 | 517 | 588 | 530 | 9 | 0.0009 | 0.013 | 6.7 | B | C | C | A | A | 13212 | A | Comparative example |

(continued)

| No. | Alloying treatment conditions | | | | $M_{Si} \times M_{Mn}$ | Amount of internal oxide ($g/m^2$) | Fe concentration in coated layer (mass%) | Test results | | | | | | | Class |
|---|---|---|---|---|---|---|---|---|---|---|---|---|---|---|---|
| | Lower limit of formula (1) (°C) | Upper limit of formula (1) (°C) | Alloying treatment temperature (°C) | Alloying treatment time (s) | | | | Coating appearance: Bare spot | Coating appearance: Dross adhesion | Coating appearance: Uneven alloying | Adhesion of coating | Powdering resistance | Steel sheet workability | Bendability | |
| 49 | 484 | 561 | 510 | 23 | 0.0096 | 0.011 | 7.5 | C | A | A | A | A | 14874 | A | Comparative example |
| 50 | 508 | 574 | 520 | 14 | 0.0042 | 0.039 | 6.8 | C | A | A | A | A | 13758 | A | Comparative example |
| 51 | 483 | 559 | 520 | 17 | 0.0080 | 0.039 | 9.8 | A | A | C | A | A | 12019 | A | Comparative example |
| 52 | 575 | 617 | 590 | 28 | 0.0003 | 0.007 | 8.9 | A | A | A | A | A | 13456 | C | Comparative example |
| 53 | 525 | 575 | 540 | 23 | 0.0551 | 0.075 | 8.0 | A | A | A | A | A | 13359 | C | Comparative example |
| 54 | 426 | 493 | 530 | 15 | 0.0016 | 0.026 | 13.8 | C | B | A | A | A | 12774 | A | Comparative example |
| 55 | 494 | 564 | 520 | 18 | 0.0022 | 0.032 | 8.2 | B | A | A | A | A | 12333 | A | Example |
| 56 | 470 | 544 | 530 | 55 | 0.0071 | 0.015 | 14.1 | A | A | A | A | B | 13256 | A | Example |
| 57 | 486 | 559 | 510 | 22 | 0.0033 | 0.028 | 8.9 | A | A | A | A | A | 12284 | A | Example |
| 58 | 468 | 534 | 520 | 28 | 0.0068 | 0.023 | 13.8 | A | A | A | A | A | 13133 | A | Example |

Industrial Applicability

According to the present invention, there is provided a method for producing a high-strength hot-dip galvanized steel sheet including, as a base material, a high-strength steel sheet containing Si and Mn, in which the hot-dip galvanized steel sheet having excellent adhesion of coating and beautiful coating appearance free from bare spots can be stably produced. In the present invention, there is also provided a method for producing a high-strength hot-dip galvanized steel sheet, in which the hot-dip galvanized steel sheet excellent in coating appearance, adhesion of coating, powdering resistance, workability, and bendability can be stably produced by optimizations of annealing conditions, alloying treatment conditions, and so forth.

Reference Signs List

| | |
|---|---|
| 1 | ultrasonic oscillation member |
| 2 | horn |
| 3 | roll |
| 4 | ultrasonic oscillator |
| 5 | hot-dip galvanizing bath |
| 6 | sink roll |
| 30 | roll shaft |
| S | steel sheet |

## Claims

**1.** A method for producing a high-strength hot-dip galvanized steel sheet having a tensile strength of 440 MPa or more, wherein the method is performed in a continuous galvanizing line with a strip speed of 60 mpm or more and 150 mpm or less, said method comprising:

subjecting a steel sheet to recrystallization annealing, wherein the steel sheet has a chemical composition containing, by mass percent, Si: 0.1% or more and 2.5% or less, Mn: 1.0% or more and 3.0% or less, C: 0.3% or less, P: 0.100% or less, and S: 0.010% or less, and optionally one or two or more selected from Al: 0.01% or more and 1.0% or less, Mo: 0.05% or more and 1.0% or less, Nb: 0.005% or more and 0.05% or less, Ti: 0.005% or more and 0.05% or less, Cu: 0.05% or more and 1.0% or less, Ni: 0.05% or more and 1.0% or less, Cr: 0.01% or more and 0.8% or less, B: 0.0005% or more and 0.005% or less, Sb: 0.001% or more and 0.10% or less, and Sn: 0.001% or more and 0.10% or less, the balance being Fe and incidental impurities, then subjecting the steel sheet to immersion in a hot-dip galvanizing bath having effective Al concentration of 0.07% or more by mass and 0.170% or less by mass to perform hot-dip galvanization, wherein the effective Al concentration in the bath is a value obtained by subtracting the concentration of Fe in the bath from the concentration of Al in the bath, subsequently subjecting the steel sheet withdrawn from the hot-dip galvanizing bath to coating weight adjustment;
applying ultrasound having a frequency of 10 kHz or more to the steel sheet from an ultrasonic oscillation member having an amplitude of 10 μm or less for 0.010 seconds or more and 0.500 seconds or less during a period from a start of the immersion to an end of the coating weight adjustment, the ultrasonic oscillation member being in contact with molten zinc and set at a distance of 0 mm or more and 30 mm or less from the steel sheet, wherein the time for applying the ultrasound is the time when the steel sheet lies in the range where the perpendicular distance from the surface of the steel sheet to the ultrasonic oscillation member is within 30 mm, and;
subjecting a hot-dip galvanized layer of the steel sheet after the coating weight adjustment to alloying treatment for 10 seconds or more.

**2.** The method for producing a high-strength hot-dip galvanized steel sheet according to Claim 1, wherein the ultrasound applied to the steel sheet has a frequency of 80 kHz or less.

**3.** The method for producing a high-strength hot-dip galvanized steel sheet according to Claim 1 or 2, wherein the hot-dip galvanized layer is subjected to the alloying treatment for 10 seconds or more and 60 seconds or less.

4. The method for producing a high-strength hot-dip galvanized steel sheet according to any one of Claims 1 to 3, wherein the alloying treatment is performed such that the hot-dip galvanized layer has an Fe concentration of 6% or more by mass and 15% or less by mass.

5. The method for producing a high-strength hot-dip galvanized steel sheet according to any one of Claims 1 to 4, wherein the ultrasound is applied to the steel sheet from the ultrasonic oscillation member at a position in a range of, in a height direction with respect to a surface of the hot-dip galvanizing bath, 1.5 m below the surface of the hot-dip galvanizing bath to 5.0 m above the surface of the hot-dip galvanizing bath.

6. The method for producing a high-strength hot-dip galvanized steel sheet according to any one of Claims 1 to 5, wherein the recrystallization annealing is performed in an atmosphere having a dew-point temperature of -40°C or higher to -20°C or lower.

7. The method for producing a high-strength hot-dip galvanized steel sheet according to any one of Claims 1 to 6, wherein the ultrasonic oscillation member includes a rotatable roll.

8. The method for producing a high-strength hot-dip galvanized steel sheet according to Claim 7, wherein the roll included in the ultrasonic oscillation member vibrates ultrasonically in a radial direction of the roll and rotates in such a manner that a roll surface facing the steel sheet moves in a same direction as a traveling direction of the steel sheet.

9. The method for producing a high-strength hot-dip galvanized steel sheet according to any one of Claims 1 to 8, wherein the coating weight adjustment is performed by scraping molten zinc adhering to a surface of the steel sheet with the ultrasonic oscillation member while the ultrasound is applied to the steel sheet withdrawn from the hot-dip galvanizing bath with the ultrasonic oscillation member.

10. The method for producing a high-strength hot-dip galvanized steel sheet according to any one of Claims 1 to 9, wherein the alloying treatment is performed at an alloying treatment temperature T in °C that satisfies formulae (1) and (2) below:

$$(25 \times \log(f + 2) - 300 \times \log(0.12 - [Al]) + 20) \leq T \leq (35 \times \log(f + 2) - 250 \times \log(0.12 - [Al]) + 150) \cdots(1)$$

$$T \leq 570 \cdots(2)$$

where [Al] is an effective Al concentration % by mass in the hot-dip galvanizing bath, and
f is the ultrasonic frequency in kHz of the ultrasound applied to the steel sheet.

11. A high-strength hot-dip galvanized steel sheet having a tensile strength of 440 MPa or more, comprising:

a hot-dip galvannealed layer on a surface of a steel sheet, wherein the steel sheet has a chemical composition containing, by mass percent, Si: 0.1% or more and 2.5% or less, Mn: 1.0% or more and 3.0% or less, C: 0.3% or less, P: 0.100% or less, and S: 0.010% or less, and optionally one or two or more selected from Al: 0.01% or more and 1.0% or less, Mo: 0.05% or more and 1.0% or less, Nb: 0.005% or more and 0.05% or less, Ti: 0.005% or more and 0.05% or less, Cu: 0.05% or more and 1.0% or less, Ni: 0.05% or more and 1.0% or less, Cr: 0.01% or more and 0.8% or less, B: 0.0005% or more and 0.005% or less, Sb: 0.001% or more and 0.10% or less, and Sn: 0.001% or more and 0.10% or less, the balance being Fe and incidental impurities,
wherein the hot-dip galvannealed layer has an Fe concentration of 6% or more by mass and 15% or less by mass,
an amount of internal oxide contained in the steel sheet is 0.05 $g/m^2$ or less in terms of oxygen O, and
a total amount of Si oxide $M_{Si}$ in $g/m^2$ in terms of metal Si and a total amount of Mn oxide $M_{Mn}$ in $g/m^2$ in terms of metal Mn present in the hot-dip galvannealed layer and at an interface between the hot-dip galvannealed layer and the steel sheet satisfy formula (3):

$$0.0004 \leq M_{Si} \times M_{Mn} \leq 0.0450. \cdots(3),$$

wherein the amount of internal oxide and the total amount of Si and Mn oxides are measured according to the methods described in the description.

## Patentansprüche

1. Verfahren zur Herstellung eines hochfesten feuerverzinkten Stahlblechs mit einer Zugfestigkeit von 440 MPa oder mehr, wobei das Verfahren in einer Durchlaufverzinkungsanlage mit einer Bandgeschwindigkeit von 60 mpm oder mehr und 150 mpm oder weniger durchgeführt wird, wobei das Verfahren umfasst:

   Unterziehen eines Stahlblechs einem Rekristallisationsglühen, wobei das Stahlblech eine chemische Zusammensetzung aufweist, die, bezogen auf Masseprozent, Si: 0,1 % oder mehr und 2,5 % oder weniger, Mn: 1,0 % oder mehr und 3,0 % oder weniger, C: 0,3 % oder weniger, P: 0,100 % oder weniger und S: 0,010 % oder weniger und optional eines oder zwei oder mehr, ausgewählt aus Al: 0,01 % oder mehr und 1,0 % oder weniger, Mo: 0,05 % oder mehr und 1,0 % oder weniger, Nb: 0,005 % oder mehr und 0,05 % oder weniger, Ti: 0,005 % oder mehr und 0,05 % oder weniger, Cu: 0,05 % oder mehr und 1,0 % oder weniger, Ni: 0,05 % oder mehr und 1,0 % oder weniger, Cr: 0,01 % oder mehr und 0,8 % oder weniger, B: 0,0005 % oder mehr und 0,005 % oder weniger, Sb: 0,001 % oder mehr und 0,10 % oder weniger und Sn: 0,001 % oder mehr und 0,10 % oder weniger, enthält, wobei der Rest Fe und zufällige Verunreinigungen ist, dann Unterziehen des Stahlblechs einem Eintauchen in ein Feuerverzinkungsbad mit einer effektiven Al-Konzentration von 0,07 Masse-% oder mehr und 0,170 Masse-% oder weniger zur Durchführung einer Feuerverzinkung, wobei die effektive Al-Konzentration in dem Bad ein Wert ist, der durch Subtrahieren der Fe-Konzentration im Bad von der Al-Konzentration im Bad erhalten wird, anschließendes Unterziehen des Stahlblechs, das dem Feuerverzinkungsbad entnommen wurde, einer Beschichtungsgewichtseinstellung,
   Anwenden von Ultraschall mit einer Frequenz von 10 kHz oder mehr auf das Stahlblech ausgehend von einem Ultraschallschwingungselement mit einer Amplitude von 10 μm oder weniger für 0,010 Sekunden oder mehr und 0,500 Sekunden oder weniger während eines Zeitraums vom Beginn des Eintauchens bis zum Ende der Beschichtungsgewichtseinstellung, wobei das Ultraschallschwingungselement in Kontakt mit geschmolzenem Zink steht und in einem Abstand von 0 mm oder mehr und 30 mm oder weniger vom Stahlblech angeordnet ist, wobei die Zeit der Ultraschallanwendung die Zeit ist, während der das Stahlblech in dem Bereich liegt, in dem der senkrechte Abstand von der Oberfläche des Stahlblechs zum Ultraschallschwingungselement innerhalb von 30 mm liegt, und
   Unterziehen der feuerverzinkten Schicht des Stahlblechs nach der Beschichtungsgewichtseinstellung einer Legierungsbehandlung für 10 Sekunden oder mehr.

2. Verfahren zur Herstellung eines hochfesten feuerverzinkten Stahlblechs gemäß Anspruch 1, wobei der auf das Stahlblech angewandte Ultraschall eine Frequenz von 80 kHz oder weniger aufweist.

3. Verfahren zur Herstellung eines hochfesten feuerverzinkten Stahlblechs gemäß Anspruch 1 oder 2, wobei die feuerverzinkte Schicht der Legierungsbehandlung für 10 Sekunden oder mehr und 60 Sekunden oder weniger unterzogen wird.

4. Verfahren zur Herstellung eines hochfesten feuerverzinkten Stahlblechs gemäß einem der Ansprüche 1 bis 3, wobei die Legierungsbehandlung derart durchgeführt wird, dass die feuerverzinkte Schicht eine Fe-Konzentration von 6 Masse-% oder mehr und 15 Masse-% oder weniger aufweist.

5. Verfahren zur Herstellung eines hochfesten feuerverzinkten Stahlblechs gemäß einem der Ansprüche 1 bis 4, wobei der Ultraschall auf das Stahlblech ausgehend von dem Ultraschallschwingungselement an einer Stelle in einem Bereich in Höhenrichtung in Bezug auf eine Oberfläche des Feuerverzinkungsbads von 1,5 m unter der Oberfläche des Feuerverzinkungsbads bis 5,0 m über der Oberfläche des Feuerverzinkungsbads angewandt wird.

6. Verfahren zur Herstellung eines hochfesten feuerverzinkten Stahlblechs gemäß einem der Ansprüche 1 bis 5, wobei das Rekristallisationsglühen in einer Atmosphäre mit einer Taupunkttemperatur von -40°C oder höher bis -20°C oder niedriger durchgeführt wird.

7. Verfahren zur Herstellung eines hochfesten feuerverzinkten Stahlblechs gemäß einem der Ansprüche 1 bis 6, wobei das Ultraschallschwingungselement eine drehbare Walze einschließt.

**8.** Verfahren zur Herstellung eines hochfesten feuerverzinkten Stahlblechs gemäß Anspruch 7, wobei die Walze in dem Ultraschallschwingungselement durch den Ultraschall in einer radialen Richtung der Walze vibriert und sich derart dreht, dass sich eine Walzenoberfläche, die dem Stahlblech gegenüberliegt, in dieselbe Richtung wie eine Laufrichtung des Stahlblechs bewegt.

**9.** Verfahren zur Herstellung eines hochfesten feuerverzinkten Stahlblechs gemäß einem der Ansprüche 1 bis 8, wobei die Beschichtungsgewichtseinstellung durch Abstreichen von geschmolzenem Zink, der an der Oberfläche des Stahlblechs haftet, mit dem Ultraschallschwingungselement durchgeführt wird, während der Ultraschall auf das Stahlblech, das dem Feuerverzinkungsbad entnommenen wurde, mit dem Ultraschallschwingungselement angewandt wird.

**10.** Verfahren zur Herstellung eines hochfesten feuerverzinkten Stahlblechs gemäß einem der Ansprüche 1 bis 9, wobei die Legierungsbehandlung bei einer Legierungsbehandlungstemperatur T in °C durchgeführt wird, die die nachstehenden Formeln (1) und (2) erfüllt:

$$(25 \times \log (f + 2) - 300 \times \log (0{,}12 - [Al]) + 20) \leq T \leq (35 \times \log (f + 2) - 250 \times \log (0{,}12 - [Al]) + 150) \quad (1)$$

$$T \leq 570 \quad (2)$$

worin [Al] eine effektive Al-Konzentration in Masse-% in dem Feuerverzinkungsbad ist und
f die Ultraschallfrequenz in kHz des auf das Stahlblech angewandten Ultraschalls ist.

**11.** Hochfestes feuerverzinktes Stahlblech mit einer Zugfestigkeit von 440 MPa oder mehr, umfassend:

eine feuerverzinkte und danach wärmebehandelte Schicht auf einer Oberfläche eines Stahlblechs, wobei das Stahlblech eine chemische Zusammensetzung aufweist, die, bezogen auf Masseprozent, Si: 0,1 % oder mehr und 2,5 % oder weniger, Mn: 1,0 % oder mehr und 3,0 % oder weniger, C: 0,3 % oder weniger, P: 0,100 % oder weniger und S: 0,010 % oder weniger und optional eines oder zwei oder mehr, ausgewählt aus Al: 0,01 % oder mehr und 1,0 % oder weniger, Mo: 0,05 % oder mehr und 1,0 % oder weniger, Nb: 0,005 % oder mehr und 0,05 % oder weniger, Ti: 0,005 % oder mehr und 0,05 % oder weniger, Cu: 0,05 % oder mehr und 1,0 % oder weniger, Ni: 0,05 % oder mehr und 1,0 % oder weniger, Cr: 0,01 % oder mehr und 0,8 % oder weniger, B: 0,0005 % oder mehr und 0,005 % oder weniger, Sb: 0,001 % oder mehr und 0,10 % oder weniger und Sn: 0,001 % oder mehr und 0,10 % oder weniger, enthält, wobei der Rest Fe und zufällige Verunreinigungen ist,
wobei die feuerverzinkte und danach wärmebehandelte Schicht eine Fe-Konzentration von 6 Masse-% oder mehr und 15 Masse-% oder weniger aufweist,
eine Menge eines inneren Oxids, das in dem Stahlblech enthalten ist, bezogen auf Sauerstoff, 0,05 g/$m^2$ oder weniger beträgt und
eine Gesamtmenge an Si-Oxid $M_{Si}$ in g/$m^2$, bezogen auf das Metall Si, und eine Gesamtmenge an Mn-Oxid $M_{Mn}$ in g/$m^2$, bezogen auf das Metall Mn, die in der feuerverzinkten und danach wärmebehandelten Schicht und an einer Grenzfläche zwischen der feuerverzinkten und danach wärmebehandelten Schicht und dem Stahlblech vorhanden sind, Formel (3) erfüllen:

$$0{,}0004 \leq M_{Si} \times M_{Mn} \leq 0{,}0450 \quad (3),$$

wobei die Menge des inneren Oxids und die Gesamtmenge an Si- und Mn-Oxiden gemäß dem in der Beschreibung beschriebenen Verfahren gemessen werden.

## Revendications

**1.** Procédé de production d'une tôle d'acier galvanisée par immersion à chaud à haute résistance ayant une résistance à la traction de 440 MPa ou plus, dans lequel le procédé est mis en oeuvre dans une ligne de galvanisation continue avec une vitesse de bande de 60 mpm ou plus et de 150 mpm ou moins, ledit procédé comportant :

la soumission d'une tôle d'acier à un recuit de recristallisation, dans lequel la tôle d'acier a une composition chimique contenant, en pourcentage en masse, Si : 0,1 % ou plus et 2,5 % ou moins, Mn : 1,0 % ou plus et 3,0 % ou moins, C : 0,3 % ou moins, P : 0,100 % ou moins, et S : 0,010 % ou moins, et éventuellement un ou deux éléments ou plus choisis dans un groupe composé de Al : 0,01 % ou plus et 1,0 % ou moins, Mo : 0,05 % ou plus et 1,0 % ou moins, Nb : 0,005 % ou plus et 0,05 % ou moins, Ti : 0,005 % ou plus et 0,05 % ou moins, Cu : 0,05 % ou plus et 1,0 % ou moins, Ni : 0,05 % ou plus et 1,0 % ou moins, Cr : 0,01 % ou plus et 0,8 % ou moins, B : 0,0005 % ou plus et 0,005 % ou moins, Sb : 0,001 % ou plus et 0,10 % ou moins, et Sn : 0,001 % ou plus et 0,10 % ou moins, le reste étant Fe et des impuretés accidentelles, puis la soumission de la tôle d'acier à une immersion dans un bain de galvanisation par immersion à chaud ayant une concentration effective en Al de 0,07 % ou plus en masse et 0,170 % ou moins en masse pour mettre en oeuvre une galvanisation par immersion à chaud, dans lequel la concentration effective en Al dans le bain est une valeur obtenue par soustraction de la concentration de Fe dans le bain de la concentration d'Al dans le bain,
ensuite la soumission de la tôle d'acier retirée du bain de galvanisation par immersion à chaud à un ajustement de poids de revêtement ;
l'application d'ultrasons ayant une fréquence de 10 kHz ou plus à la tôle d'acier à partir d'un élément d'oscillation ultrasonore ayant une amplitude de 10 $\mu$m ou moins pendant 0,010 seconde ou plus et 0,500 seconde ou moins pendant une période allant d'un début de l'immersion à une fin de l'ajustement de poids de revêtement, l'élément d'oscillation ultrasonore étant en contact avec du zinc fondu et réglé à une distance de 0 mm ou plus et de 30 mm ou moins de la tôle d'acier, dans lequel le temps d'application des ultrasons est le temps pendant lequel la tôle d'acier s'inscrit dans la plage où la distance perpendiculaire de la surface de la tôle d'acier à l'élément d'oscillation ultrasonore est au plus de 30 mm, et ;
la soumission d'une couche galvanisée par immersion à chaud de la tôle d'acier après l'ajustement de poids de revêtement à un traitement d'alliage pendant 10 secondes ou plus.

**2.** Procédé de production d'une tôle d'acier galvanisée par immersion à chaud à haute résistance selon la revendication 1, dans lequel les ultrasons appliqués à la tôle d'acier ont une fréquence de 80 kHz ou moins.

**3.** Procédé de production d'une tôle d'acier galvanisée par immersion à chaud à haute résistance selon la revendication 1 ou la revendication 2, dans lequel la couche galvanisée par immersion à chaud est soumise au traitement d'alliage pendant 10 secondes ou plus et 60 secondes ou moins.

**4.** Procédé de production d'une tôle d'acier galvanisée par immersion à chaud à haute résistance selon l'une quelconque des revendications 1 à 3, dans lequel le traitement d'alliage est mis en oeuvre de telle sorte que la couche galvanisée par immersion à chaud a une concentration en Fe de 6 % ou plus en masse et 15 % ou moins en masse.

**5.** Procédé de production d'une tôle d'acier galvanisée par immersion à chaud à haute résistance selon l'une quelconque des revendications 1 à 4, dans lequel les ultrasons sont appliqués à la tôle d'acier à partir de l'élément d'oscillation ultrasonore à une position dans une plage, dans une direction de hauteur par rapport à une surface du bain de galvanisation par immersion à chaud, de 1,5 m au-dessous de la surface du bain de galvanisation par immersion à chaud à 5,0 m au-dessus de la surface du bain de galvanisation par immersion à chaud.

**6.** Procédé de production d'une tôle d'acier galvanisée par immersion à chaud à haute résistance selon l'une quelconque des revendications 1 à 5, dans lequel le recuit de recristallisation est mis en oeuvre dans une atmosphère ayant une température de point de rosée de -40 °C ou plus à -20 °C ou moins.

**7.** Procédé de production d'une tôle d'acier galvanisée par immersion à chaud à haute résistance selon l'une quelconque des revendications 1 à 6, dans lequel l'élément d'oscillation ultrasonore comporte un rouleau rotatif.

**8.** Procédé de production d'une tôle d'acier galvanisée par immersion à chaud à haute résistance selon la revendication 7, dans lequel le rouleau compris dans l'élément d'oscillation ultrasonore vibre par ultrasons dans une direction radiale du rouleau et tourne de telle manière qu'une surface de rouleau faisant face à la tôle d'acier se déplace dans une même direction qu'une direction de parcours de la tôle d'acier.

**9.** Procédé de production d'une tôle d'acier galvanisée par immersion à chaud à haute résistance selon l'une quelconque des revendications 1 à 8, dans lequel l'ajustement de poids de revêtement est mis en oeuvre par le raclage de zinc fondu adhérant à une surface de la tôle d'acier avec l'élément d'oscillation ultrasonore pendant que les ultrasons sont appliqués à la tôle d'acier retirée du bain de galvanisation par immersion à chaud avec l'élément d'oscillation ultrasonore.

**10.** Procédé de production d'une tôle d'acier galvanisée par immersion à chaud à haute résistance selon l'une quelconque des revendications 1 à 9, dans lequel le traitement d'alliage est mis en oeuvre à une température de traitement d'alliage T en °C qui satisfait les formules (1) et (2) ci-dessous :

$$(25 \times \log (f + 2) - 300 \times \log (0{,}12 - [Al]) +20) \leq T \leq (35 \times \log (f + 2) - 250 \times \log (0{,}12 - [Al]) + 150) \ldots (1)$$

$$T \leq 570 \ldots (2)$$

où [Al] est un % en masse de concentration effective en Al dans le bain de galvanisation par immersion à chaud, et f est la fréquence ultrasonore en kHz des ultrasons appliqués à la tôle d'acier.

**11.** Tôle d'acier galvanisée par immersion à chaud à haute résistance ayant une résistance à la traction de 440 MPa ou plus, comportant :

une couche recuite après galvanisation par immersion à chaud sur une surface d'une tôle d'acier, la tôle d'acier ayant une composition chimique contenant, en pourcentage en masse, Si : 0,1 % ou plus et 2,5 % ou moins, Mn : 1,0 % ou plus et 3,0 % ou moins, C : 0,3 % ou moins, P : 0,100 % ou moins, et S : 0,010 % ou moins, et éventuellement un ou deux éléments ou plus choisis parmi Al : 0,01 % ou plus et 1,0 % ou moins, Mo : 0,05 % ou plus et 1,0 % ou moins, Nb : 0,005 % ou plus et 0,05 % ou moins, Ti : 0,005 % ou plus et 0,05 % ou moins, Cu : 0,05 % ou plus et 1,0 % ou moins, Ni : 0,05 % ou plus et 1,0 % ou moins, Cr : 0,01 % ou plus et 0,8 % ou moins, B : 0,0005 % ou plus et 0,005 % ou moins, Sb : 0,001 % ou plus et 0,10 % ou moins, et Sn : 0,001 % ou plus et 0,10 % ou moins, le reste étant Fe et des impuretés accidentelles,
dans laquelle la couche galvanisée par immersion à chaud a une concentration en Fe de 6 % ou plus en masse et 15 % ou moins en masse,
une quantité d'oxyde interne contenu dans la tôle d'acier est de 0,05 g/$m^2$ ou moins en termes d'oxygène O, et une quantité totale d'oxyde de Si $M_{Si}$ en g/$m^2$ en termes de Si métal et une quantité totale d'oxyde de Mn $M_{Mn}$ en g/$m^2$ en termes de Mn métal présent dans la couche recuite après galvanisation par immersion à chaud et au niveau d'une interface entre la couche recuite après galvanisation par immersion à chaud et la feuille d'acier satisfont la formule (3) :

$$0{,}0004 \leq M_{Si} \times M_{Mn} \leq 0{,}0450 \ldots (3),$$

dans laquelle la quantité d'oxyde interne et la quantité totale d'oxydes de Si et de Mn sont mesurées selon les procédés décrits dans la description.

FIG. 1A

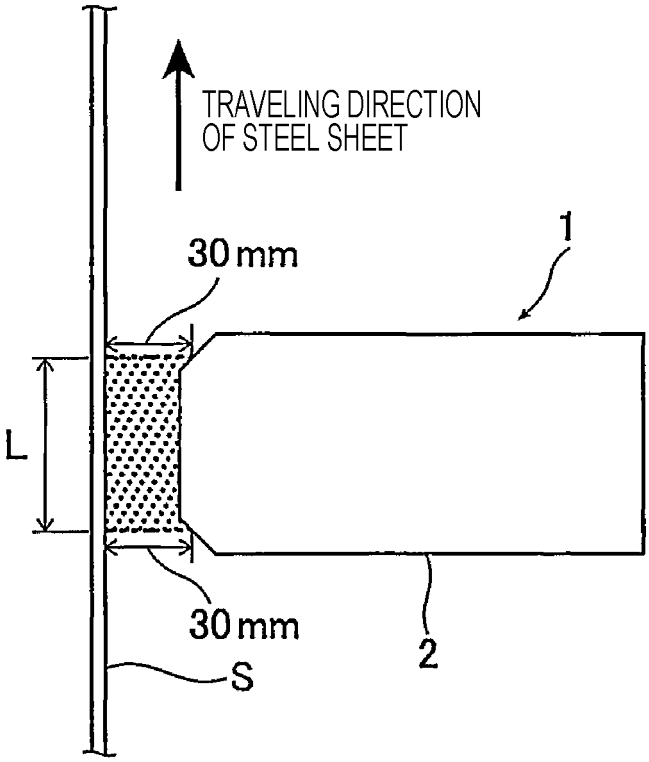
TRAVELING DIRECTION
OF STEEL SHEET
30 mm
1
L
30 mm
2
S

FIG. 1B

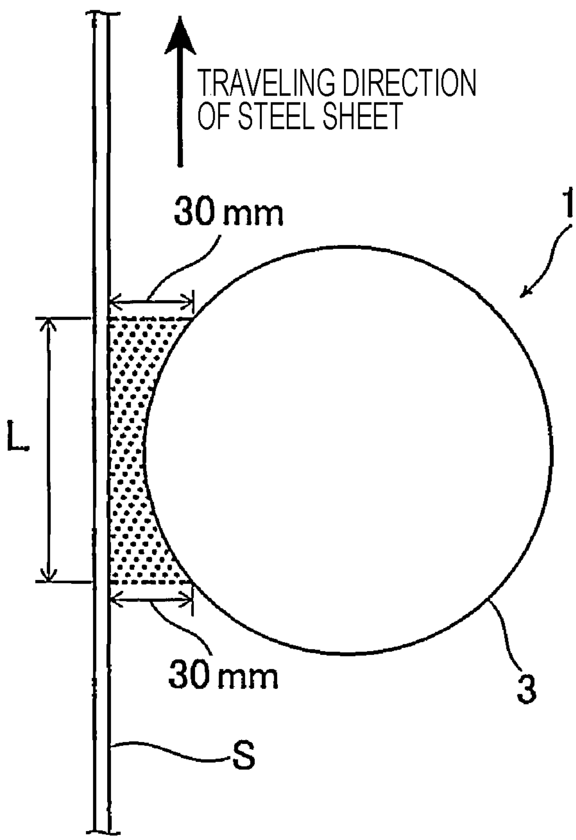
TRAVELING DIRECTION
OF STEEL SHEET
30 mm
1
L
30 mm
3
S

FIG. 2A

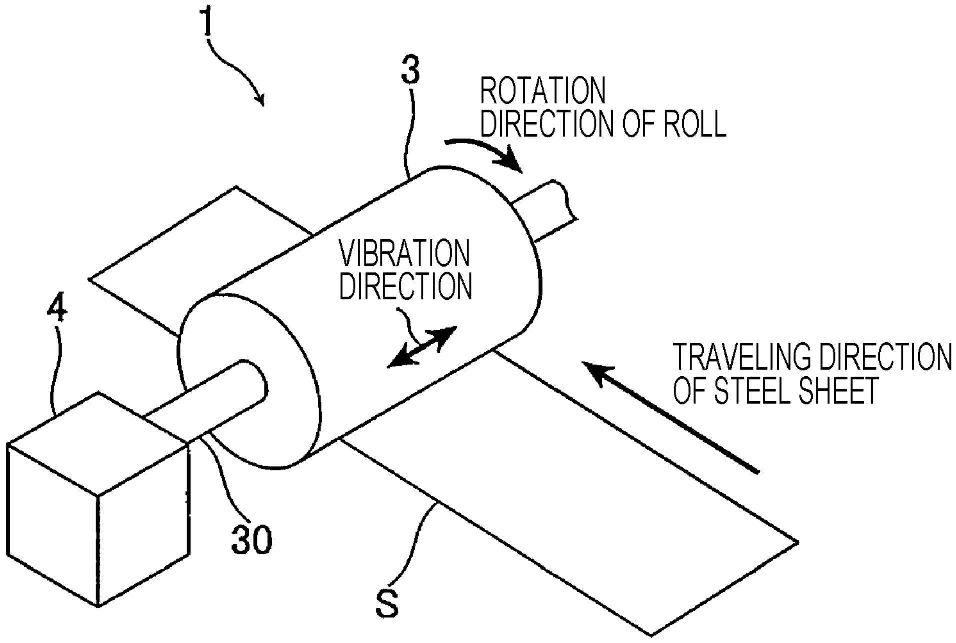
1
3
ROTATION
DIRECTION OF ROLL
VIBRATION
DIRECTION
4
TRAVELING DIRECTION
OF STEEL SHEET
30
S

FIG. 2B

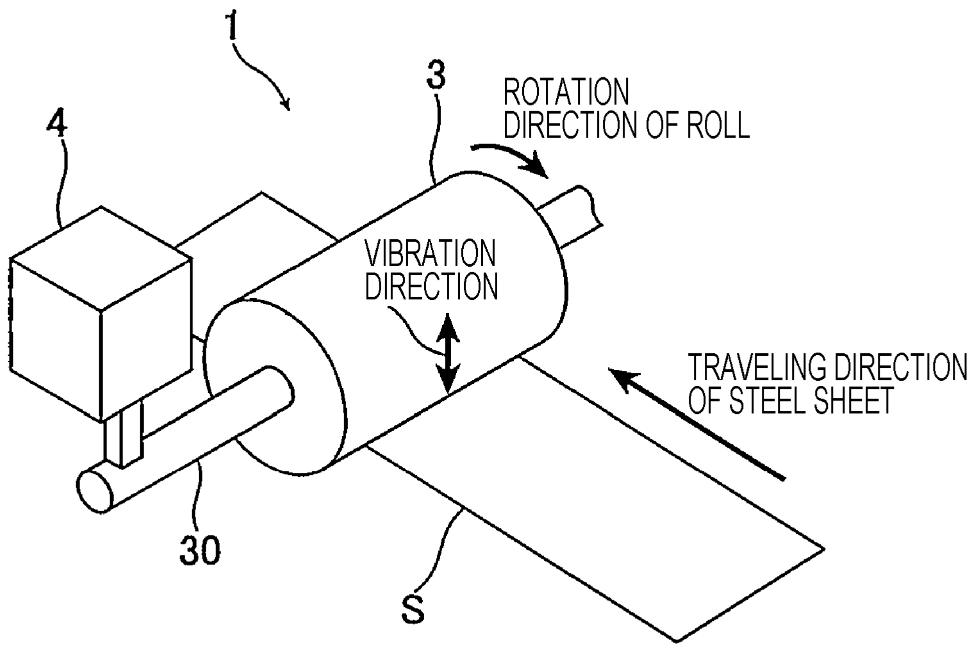
1
3
ROTATION
DIRECTION OF ROLL
4
VIBRATION
DIRECTION
TRAVELING DIRECTION
OF STEEL SHEET
30
S

FIG. 3A

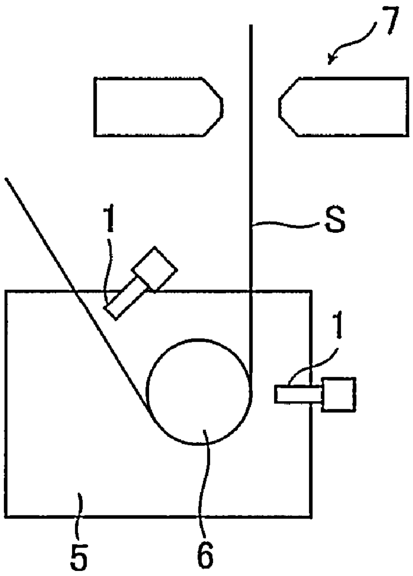


FIG. 3B

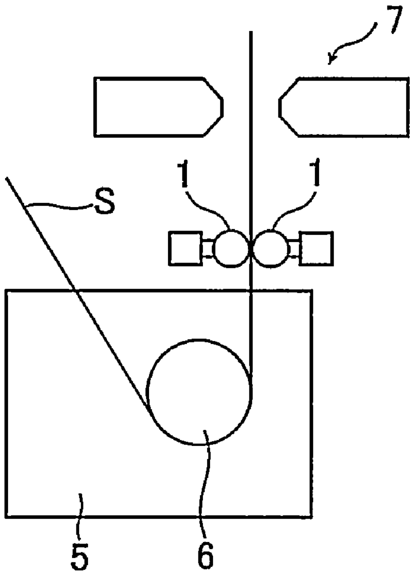


FIG. 3C

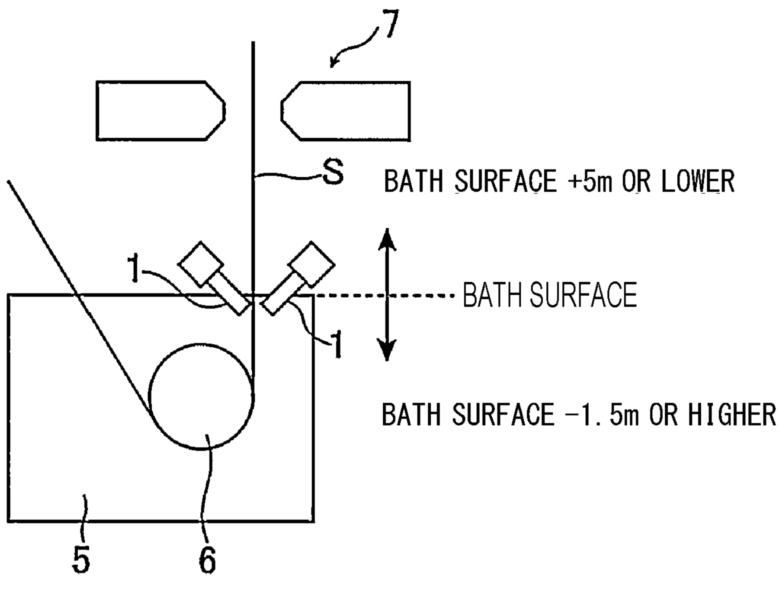

FIG. 4A

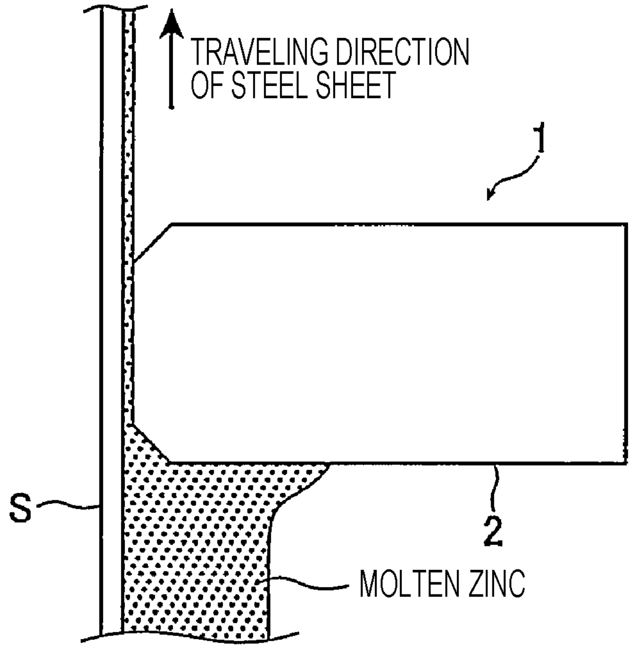
TRAVELING DIRECTION
OF STEEL SHEET
1
S
2
MOLTEN ZINC

FIG. 4B

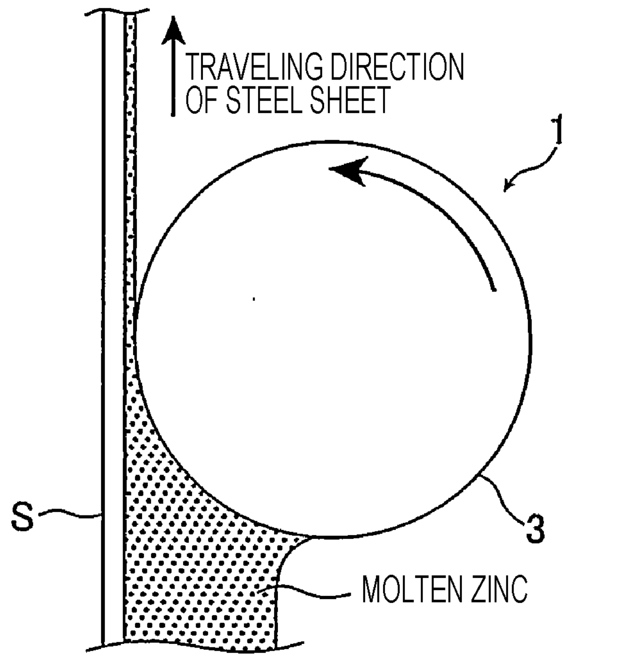
TRAVELING DIRECTION
OF STEEL SHEET
1
S
3
MOLTEN ZINC

FIG. 5

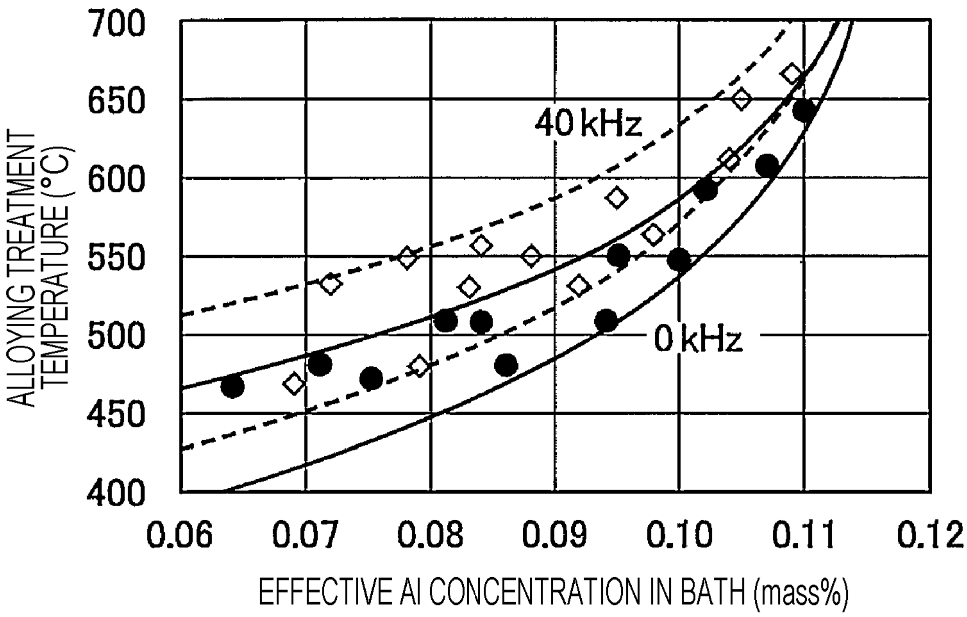

700
650
600
550
500
450
400
ALLOYING TREATMENT TEMPERATURE (°C)
40 kHz
0 kHz
0.06
0.07
0.08
0.09
0.10
0.11
0.12
EFFECTIVE Al CONCENTRATION IN BATH (mass%)


FIG. 6

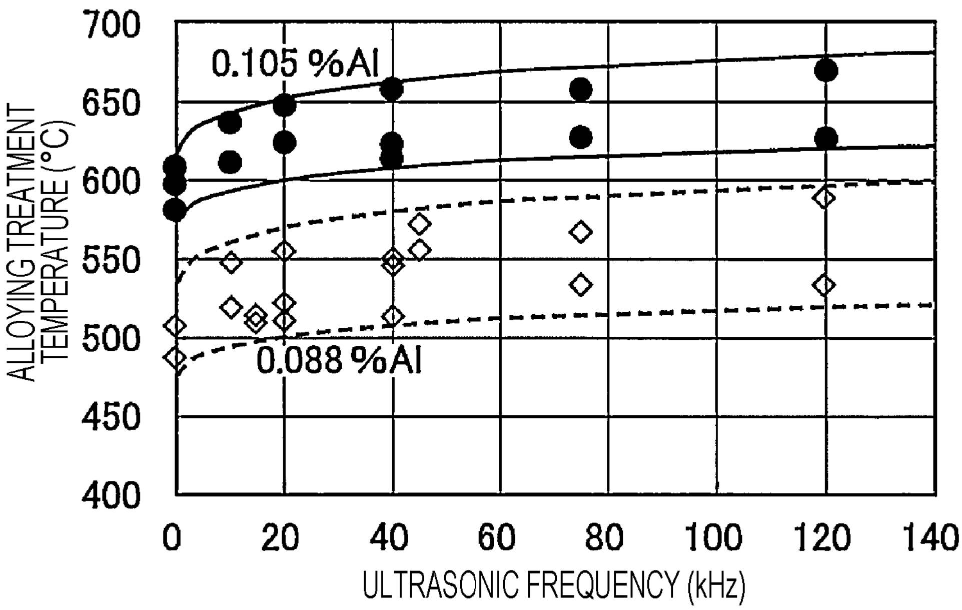

700
650
600
550
500
450
400
ALLOYING TREATMENT TEMPERATURE (°C)
0.105 %Al
0.088 %Al
0
20
40
60
80
100
120
140
ULTRASONIC FREQUENCY (kHz)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 53022126 A
- JP 57023053 A
- JP 3158449 A
- KR 1020140096811 A